# EUROPÄISCHE PATENTSCHRIFT

(11) **EP 2 931 771 B1**
(45) Veröffentlichungstag und Bekanntmachung des Hinweises auf die Patenterteilung: **07.09.2016**
(21) Anmeldenummer: 13762989.5
(22) Anmeldetag: 10.09.2013
(51) Int. Cl.: C08G 18/28, C07C 273/18, C07C 275/40, C09D 5/04, C09D 7/00, C10M 119/24, C08L 75/02, C08L 75/04

(54) **KOMPOSITION ZUR RHEOLOGIESTEUERUNG**
COMPOSITION FOR RHEOLOGY CONTROL
COMPOSITION PERMETTANT D'INFLUER SUR LA RHÉOLOGIE

(30) Priorität: 15.12.2012 EP 12008360
(43) Veröffentlichungstag der Anmeldung: 21.10.2015
(73) Patentinhaber: BYK-Chemie GmbH, 46483 Wesel (DE)
(72) Erfinder: LEUTFELD, Daniela, 46485 Wesel (DE); NAGELSDIEK, René, 46499 Hamminkeln (DE); OMEIS, Jürgen, 46286 Dorsten-Lembeck (DE); RUDNER, Jasmin, 46539 Dinslaken (DE)
(86) Internationale Anmeldenummer: PCT/EP2013/002715
(87) Internationale Veröffentlichungsnummer: WO 2014/111102

(56) Entgegenhaltungen:
- EP-A1- 1 188 779
- EP-A1- 2 292 675
- EP-A2- 1 048 681
- WO-A1-2009/139371
- DE-B3- 10 241 853
- GB-A- 2 223 492

## Beschreibung

Die vorliegende Erfindung betrifft eine Komposition sowie deren Verwendung und eine die Komposition enthaltende Zubereitung.

Um die Rheologie von flüssigen Systemen, insbesondere flüssigen Beschichtungssystemen, zu steuern, werden als rheologische Hilfstoffe vorwiegend organisch modifizierte Bentonite, Kieselsäuren, hydriertes Rizinusöl und Polyamidwachse eingesetzt.

Nachteilig am Einsatz dieser rheologischen Hilfsstoffe ist, dass diese meist in Form von trockenen Feststoffen vorliegen. Folglich werden deshalb besagte rheologische Hilfsstoffe vor dem Einsatz unter Verwendung von Lösemitteln und Scherkräften erst einmal zu einem Halbfabrikat aufgeschlossen. Alternativ können die noch nicht aufgeschlossenen rheologischen Hilfsstoffe auch so eingesetzt werden, dass diese durch gezielte Temperatursteuerung in das flüssige Beschichtungssystem eingebracht werden. Erfolgt diese Temperatursteuerung nicht gemäß den Zielvorgaben, so treten im fertigen Beschichtungssystem typischerweise Kristallite auf, die zu Fehlern in der Beschichtung führen können.

Ein genereller Nachteil des Einsatzes dieser rheologischen Hilfsstoffe ist, dass diese Trübungen und Schleierbildungen (Haze) in klaren, transparenten Beschichtungen verursachen. Außerdem ist der Umgang mit trockenen, pulverförmigen Produkten, die Stäube bei der Verarbeitung verursachen können, unerwünscht.

Eine flüssige Anwendungsalternative zu diesen festen Rheologiesteuerungsmitteln stellen Lösungen von speziellen Harnstoffverbindungen dar. Derartige Lösungen werden häufig in der Praxis eingesetzt und sind beispielsweise in der EP-A- 1 188 779 beschrieben. Als Lösemittel bzw. Trägermedium dienen typischerweise polare/ aprotische Lösemittel und/ oder sog. ionische Flüssigkeiten, bei denen es sich de facto um Salzschmelzen handelt, welche bei moderaten Temperaturbedingungen (meist unter 80°C, im Idealfall bei Raumtemperatur) flüssig sind. Die rheologiesteuernden Eigenschaften gelöster Harnstoffverbindungen sind meist zwar recht gut, wobei jedoch in vielen Fällen der Wunsch nach einem noch weiter optimierten rheologiesteuernden Verhalten besteht. Ein optimiertes Verhalten äußert sich häufig nicht nur in verbesserter rheologischer Wirksamkeit, sondern ggf. auch in einer breiten Verträglichkeit in anwendungsrelevanten Formulierungen (z.B. Bindemitteln).

Somit ist die Aufgabe der vorliegenden Erfindung die Bereitstellung eines entsprechend qualitativ hochwertigen Rheologiesteuerungsmittels.

Die Lösung dieser Aufgabe ist eine Komposition enthaltend
i) 15 - 95 Gew.-% einer Sauerstoffverbindung (A),
ii) 5 - 75 Gew.-% einer Harnstoffverbindung (B),
iii) 0 - 50 Gew.-% einer ionogene Verbindung (C) und
iv) 0 - 35 Gew.-% eines organischen Lösemittels (D),
wobei die Sauerstoffverbindung (A) eine molare Masse von 70 bis 600 g/mol sowie keine Harnstoffgruppe aufweist und vorliegt gemäß der allgemeinen Formel (I), 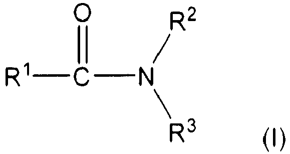 mit
R¹ jeweils gleich oder verschieden sowie repräsentiert durch Wasserstoff und/ oder einen verzweigten oder unverzweigten, gesättigten oder ungesättigten, 1 bis 16 Kohlenstoffatome, enthaltenden organischen Rest,
R² und R³ jeweils gleich oder verschieden sowie jeweils unabhängig voneinander repräsentiert durch einen verzweigten oder unverzweigten, gesättigten oder ungesättigten, 1 bis 12 Kohlenstoffatome aufweisenden organischen Rest und zwar mit der Maßgabe, dass R¹ und R² zusammen mit der R¹ und R² verbindenden Gruppierung CO-N gemeinsam einen Zyklus mit 4 bis 10 Ringatomen ausbilden können oder R² und R³ zusammen mit dem R² und R³ verbindenden N-Atom gemeinsam einen Zyklus mit 4 bis 7 Ringatomen ausbilden können, wobei die Gesamtheit der Reste R¹ R² und R³ aufweisen insgesamt 4 bis 40 Kohlenstoffatome, insgesamt 1 bis 8 Heteroatome aus der Gruppe bestehend aus O und N sowie insgesamt 1 bis 2 über Einfachbindungen verknüpfte Sauerstoffatome, die in Ether-, Ester- oder Hydroxyfunktionen vorliegen,
die Harnstoffverbindung (B) eine molare Masse von 350 bis 60000 g/mol sowie mindestens eine Harnstoffgruppe aufweist,
die ionogene Verbindung (C) eine kationische sowie eine anionische Komponente enthält und sich von der Sauerstoffverbindung (A) sowie von der Harnstoffverbindung (B) unterscheidet und
das organische Lösemittel (D) keine Harnstoffgruppe sowie keine ionische Gruppe enthält sowie maximal zwei Heteroatome ausgewählt aus der Gruppe bestehend aus Stickstoff und Sauerstoff, aufweist.

Wie vorstehend gesagt, sind erfindungsgemäß als "über Einfachbindungen verknüpfte Sauerstoffatome" ausschließlich solche relevant, die in Ether-, Ester- oder Hydroxyfunktionen vorliegen.

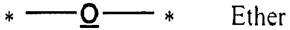

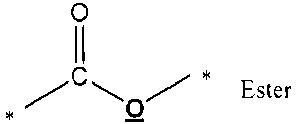

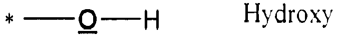

Bevorzugt handelt es sich bei den über Einfachbindungen verknüpften Sauerstoffatomen um solche, die in Ether- oder Esterfunktionen vorliegen. (In dieser und in allen anderen Strukturabbildungen stehen bei Strukturfragmenten die Sternchen-Symbole "*" für die Konnektivitätsstellen des Strukturfragments.)

Die Komponenten (A), (B), (C) und/oder (D) können jeweils in Form von verschiedenartigen Spezies, d.h. als Mischungen, vorliegen. Die erfindungsgemäße Komposition kann neben den Komponenten (A), (B), (C) und (D) ggf. auch noch weitere Bestandteile enthalten.

Die Bestimmung der molaren Masse der höhermolekularen Harnstoffverbindungen (B) (solche, die eine molare Masse von mehr als ca. 1000 g/mol aufweisen) erfolgt entsprechend der nachstehenden Bestimmung des gewichtsmittleren Molekulargewichts: Das gewichtsmittlere Molekulargewicht ist das Gewichtsmittel der mittels Gelpermeationschromatographie (GPC) bestimmten Molmassenverteilung. Die Molmassenverteilung wird gemäß DIN 55672 Teil 2 bestimmt. Als Eluent wird eine Lösung von Lithiumbromid (Gehalt 5 g/L) in Dimethylacetamid verwendet. Zur Kalibrierung werden eng verteilte, linear aufgebaute Polymethylmethacrylat-Standards mit Molekulargewichten zwischen 1000000 und 102 g/mol verwendet. Die Temperatur des gesamten GPC-Systems (Injektor, Probenteller, Detektoren und Säulen) beträgt 80°C.

Die erfindungsgemäße Komposition zeigt eine besonders gute rheologische Wirksamkeit. Beispielsweise kann die rheologische Wirksamkeit der Komposition anhand des Standvermögens (Ablaufgrenze) einer entsprechenden Lackformulierung ermittelt werden. Weiterhin zeigt die erfindungsgemäße Komposition eine breite Verträglichkeit (Kriterium: z.B. Stippen-, Schleier-, und/ oder Trübungsbildung in der Formulierung) in anwendungsrelevanten Formulierungen (z.B. Bindemitteln).

Maßgeblich an der rheologischen Leistungsfähigkeit bzw. der Eignung als Rheologiesteuerungsmittel ist das Zusammenwirken zweier rheologisch aktiver Wirkstoffe, nämlich der Sauerstoffverbindung (A) und der Harnstoffverbindung (B).

In einer Ausführungsform der Erfindung enthält die erfindungsgemäße Komposition
i) 30 - 80 Gew.-% der Sauerstoffverbindung (A),
ii) 20 - 55 Gew.-% der Harnstoffverbindung (B),
iii) 0 - 15 Gew.-% der ionogene Verbindung (C) und
iv) 2 - 25 Gew.-% des organischen Lösemittels (D).

Die Anwesenheit des Lösemittels (D) ist häufig praktikabel, wobei alternativ auch auf das Lösemittel verzichtet werden kann. Dann ist es in der Regel zweckmäßig, wenn die Mischung aus der Sauerstoffverbindung (A) und der Harnstoffverbindung (B) (ggf. in Gegenwart der ionogenen Verbindung (C)) in flüssiger Form bereitgestellt wird.

Eine derartige potenziell lösemittelfreie Ausführungsform der erfindungsgemäßen Komposition enthält typischerweise
(i) 40 - 85 Gew.% der Sauerstoffverbindung (A),
(ii) 15 - 60 Gew.% der Harnstoffstoffverbindung (B),
(iii) 0 - 5 Gew.% einer ionogenen Verbindung (C) und
(iv) 0 - 25 Gew.% des organischen Lösungsmittels (D).

In einer weiteren typischen Ausführungsform enthält die erfindungsgemäße Komposition
(i) 45 - 80 Gew.% der Sauerstoffverbindung (A),
(ii) 20 - 55 Gew.% der Harnstoffstoffverbindung (B),
(iii) 0 - 4 Gew.% einer ionogenen Verbindung (C) und
(iv) 0 - 10 Gew.% des organischen Lösungsmittels (D).

In einer besonders typischen Ausführungsform enthält die erfindungsgemäße Komposition
(i) 50 - 75 Gew.% der Sauerstoffverbindung (A),
(ii) 25 - 50 Gew.% der Harnstoffstoffverbindung (B),
(iii) 0 - 3 Gew.% einer ionogenen Verbindung (C) und
(iv) 0 - 7 Gew.% des organischen Lösungsmittels (D).

In einer speziellen Ausführungsform der Erfindung liegt die allgemeinen Formel (I) für 50 - 100 Gew.-% der Sauerstoffverbindung (A) derart vor, dass R¹ gleich oder verschieden ist sowie durch Wasserstoff oder durch einen verzweigten oder unverzweigten, 1 bis 16 Kohlenstoffatome enthaltenden organischen Rest, bevorzugt durch einen verzweigten oder unverzweigten C1-C4-Alkylrest, repräsentiert wird und R² und R³ zusammen mit dem R² und R³ verbindenden N-Atom und einem Ethersauerstoffatom gemeinsam einen Zyklus mit 5 bis 7 Ringatomen ausbilden.

Dann liegt die allgemeinen Formel (I) für 50 - 100 Gew.-% der Sauerstoffverbindung (A) bevorzugt gemäß der allgemeinen Formel (la) vor, 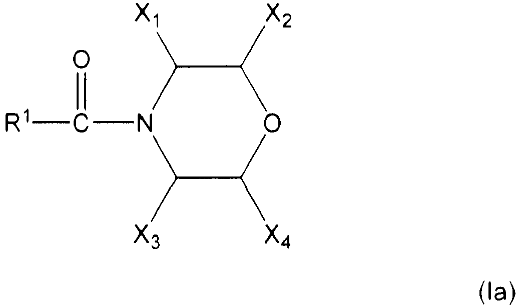 mit
R¹ gleich oder verschieden sowie repräsentiert durch Wasserstoff und/ oder eine Methylgruppe und
X₁, X₂, X₃ und X₄, jeweils gleich oder verschieden sowie jeweils unabhängig voneinander repräsentiert durch Wasserstoff und/ oder eine lineare oder verzweigte C1-C8-Alkylgruppe.
Ganz besonders bevorzugt liegen in der Formel (la) R¹ als Wasserstoff und/ oder Methylgruppe vor und es gilt X₁ = X₂ = X₃ = X₄ = H.

Die Herstellung der jeweiligen Sauerstoffverbindungen (A) erfolgt je nach Strukturtyp anhand bekannter organisch-chemischer Methoden. So wird die Herstellung von Verbindungen des Typs (la) z.B. beschrieben in GB 2223492, in US 3558619, in US 2472633, in WO 2012/137152, in DE 2445192 und in Tetrahedron 2005, 61 (46), 10903, in Tetrahedron Lett. 2012, 53, 3259, in Tetrahedron Lett. 2010, 51, 2319, in Applied Catalysis A 2003, 255, 23, in Natural Product Research 2009, 23(5), 479 sowie in Synth. Commun. 2010, 40(2), 295.

In einer weiteren speziellen Ausführungsform liegt die allgemeinen Formel (I) für 50-100 Gew.-% der Sauerstoffverbindung (A) derart vor, dass R¹ gleich oder verschieden ist und repräsentiert wird durch einen 1 oder 2 durch Einfachbindungen verknüpfte, in Ethergruppen und/ oder Estergruppen vorkommende Sauerstoffatome sowie 2 bis 16 Kohlenstoffatome aufweisenden linearen oder verzweigten organischen Rest und R² und R³ jeweils gleich oder verschieden sind sowie jeweils unabhängig voneinander repräsentiert werden durch einen verzweigten oder unverzweigten, gesättigten oder ungesättigten C1 - C8 Kohlenwasserstoffrest.

Dann liegt bevorzugt die allgemeinen Formel (I) für 50 - 100 Gew.-% der Sauerstoffverbindung (A) derart vor, dass R¹ gleich oder verschieden ist und repräsentiert wird gemäß einer oder mehrerer der allgemeinen Formelsegmente aus der Gruppe bestehend aus (Ib) sowie (Ic) 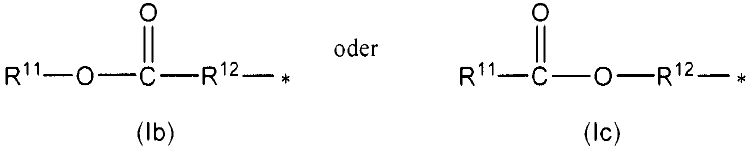 mit
R¹¹ jeweils gleich oder verschieden sowie repräsentiert durch einen linearen oder verzweigten C1-C8-Alkylrest, C5-C7-Cycloalkylrest oder Phenylrest (wobei der Cycloalkyl- oder Phenylrest auch substituiert sein kann) sowie
R¹² jeweils gleich oder verschieden sowie repräsentiert durch einen linearen oder verzweigten C2-C8-Alkylenrest.
Bevorzugt stehen in den Formelsegmenten (Ib) und (Ic) R¹¹ für einen Methyl- oder Ethylrest und R₁₂ steht für einen verzweigten oder unverzweigten C₄-Alkylenrest.
Ganz besonders bevorzugt ist dabei der Fall, dass das Formelsegment (Ib) vorliegt und R¹¹ für eine Methylgruppe und R¹² für eine verzweigte C₄-Alkylengruppe steht.

Die Herstellung der jeweiligen Sauerstoffverbindungen (A) erfolgt je nach Strukturtyp anhand bekannter organisch-chemischer Methoden. So wird die Herstellung von Verbindungen mit Segmenten des Typs (Ib) bzw. (Ic) z.B. beschrieben in J. of Chemical Education 1982, 59, 1069 sowie in DE 3339386 und in US 3417114. Auch weitere Standardmethoden der organischen Synthese sind entsprechend anwendbar. Ein Verfahren ist beispielsweise die Reaktion eines Alkohols mit einem zyklischen Carbonsäuranhydrid zu einem carbonsauren Halbester (typische Reaktionsbedingungen: 3 Stunden bei 60°C rühren, Katalysatoren wie K₂CO₃ können die Umsetzung erleichtern), die anschließende Umsetzung der Säuregruppe des carbonsauren Halbesters mit Thionylchlorid zum säurechloridfunktionellen Ester und die anschließende Umsetzung des säurechloridfunktionellen Esters mit einem entsprechenden sekundären Amin zum amidfunktionellen Ester (typische Reaktionsbedingungen: Vorlegen des Amins in einem aromatischen Kohlenwasserstoff bei Temperaturen unter 0°C und anschließende Umsetzung mit dem reaktiven Amin bei Temperaturen von max. 0°C; tertiäre Amine als Katalysatoren können die Umsetzung erleichtern). Ein alternatives Herstellverfahren ist beispielsweise die Umsetzung eines sekundären Amins mit einem zyklischen Carbonsäuranhydrid zu einem carbonsauren Säureamid (typische Reaktionsbedingungen: 24 Stunden bei Temperaturen unterhalb von 40°C rühren), die anschließende Umsetzung der Säuregruppe des carbonsauren Säureamids mit Thionylchlorid zum säurechloridfunktionellen Amid sowie die Umsetzung des säurechloridfunktionellen Amids mit einem Alkohol zum amidfunktionellen Ester (typische Reaktionsbedingungen: bei Temperaturen unterhalb von 30°C rühren).

Alternativ liegt die allgemeinen Formel (I) für 50 - 100 Gew.-% der Sauerstoffverbindung (A) bevorzugt derart vor, dass R¹ gleich oder verschieden ist und repräsentiert wird gemäß dem allgemeinen Formelsegment (Id) 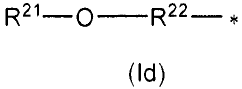 mit
R²¹ jeweils gleich oder verschieden sowie repräsentiert durch einen linearen oder verzweigten C1-C4-Alkylrest sowie
R²² jeweils gleich oder verschieden sowie repräsentiert durch einen linearen oder verzweigten C2-C6-Alkylenrest.
Besonders bevorzugt ist dabei der Fall, dass im Formelsegment (Id) R²¹ für eine Methyl- oder Ethylrest steht und R²² für einen linearen oder verzweigten C2- bis C4-Alkylenrest.
Ganz besonders bevorzugt ist dabei der Fall, dass im Formelsegment (Id) R²¹ für einen Methylrest und R²² für einen C2-Alkylenrest steht.

Die Herstellung der jeweiligen Sauerstoffverbindungen (A) erfolgt je nach Strukturtyp anhand bekannter organisch-chemischer Methoden. So wird die Herstellung von Verbindungen mit Segmenten des Typs (Id) z.B. beschrieben in der US 2011/292141, in der US 2011/251430 sowie in der US 2010/076223.

In einer weiteren Ausführungsform kann die Formel (I) für OH-substituierte Lactame stehen, welche die allgemeine Formel (Ie) aufweisen 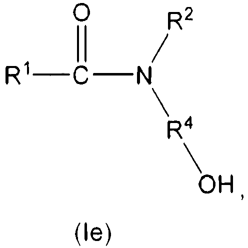 wobei R₁ mit R₂ eine verbrückende Alkyleneinheit bildet, welche zusammen mit der R¹ und R² verbindenden Gruppierung CO-N einen Zyklus bildet, welcher bevorzugt aus 5 bis 7 Ringatomen besteht, und wobei R⁴ für einen C2- bis C6-Alkylenrest steht.

Die Herstellung der jeweiligen Sauerstoffverbindungen (A) erfolgt je nach Strukturtyp anhand bekannter organisch-chemischer Methoden. So ist die Herstellung von Verbindungen des Typs (Ie) z.B. möglich durch Umsetzung von entsprechenden Lactonen mit Aminoalkoholen (typische Bedingungen: Lacton und Aminoalkohol 6 Stunden bei 180°C erhitzen und anschließend nochmals 15 Stunden bei 240°C erhitzen; Katalysatoren wie p-Toluolsulfonsäure können die Umsetzung erleichtern).

Die rheologische Wirksamkeit der Sauerstoffverbindung (A) wird durch die Anwesenheit der Harnstoffverbindung (B) noch deutlich gesteigert. Dabei ist die Harnstoffverbindung (B) als solches ebenfalls rheologisch wirksam.

In einer besonders bevorzugten Ausführungsform der Erfindung weist 70 - 100 Gew.-% der Harnstoffverbindung (B) entweder mindestens zwei Harnstoffgruppen oder mindestens eine Harnstoffgruppe und mindestens eine Urethangruppen auf.

Häufig liegt 50 - 100 Gew.-% der Harnstoffverbindung (B) gemäß der allgemeinen Formel (II) vor

R³¹-[R³³-Z-R³⁴-W-]ₙR³² (II)

mit
R³¹ und R³² jeweils gleich oder verschieden sowie jeweils unabhängig voneinander repräsentiert durch einen verzweigten oder unverzweigten, gesättigten oder ungesättigten 1 - 100 Kohlenstoffatome enthaltenden organischen Rest, der maximal jeweils eine Harnstoffgruppe und maximal jeweils eine Urethangruppe aufweist, R³³ und R³⁴ jeweils gleich oder verschieden sowie jeweils unabhängig voneinander repräsentiert durch 1 - 300 Kohlenstoffatome enthaltende, optional Ethergruppen enthaltende verzweigte oder unverzweigte Polyesterreste, 2 - 300 Kohlenstoffatome enthaltende verzweigte oder unverzweigte Polyetherreste, 1 - 300 Kohlenstoffatome enthaltende verzweigte oder unverzweigte Polyamid reste, 3 bis 100 Siliziumatome enthaltende Polysiloxanreste, verzweigte oder unverzweigte C2-C22-Alkylenreste, verzweigte oder unverzweigte C3-C18-Alkenylenreste, C5-C12-Arylenreste und/ oder verzweigte oder unverzweigte C7-C22 Arylalkylenreste,
Z und W jeweils gleich oder verschieden sowie jeweils unabhängig voneinander repräsentiert durch NH-CO-O und/ oder NH-CO-NH,
n jeweils gleich oder verschieden sowie repräsentiert durch eine ganze Zahl von 1 bis 150, bevorzugt von 2 bis 120.

In einer spezielle Ausführungsform der Erfindung weist 50 - 100 Gew.-% der Harnstoffverbindung (B) jeweils ein Molekulargewicht von 2000 bis 55000 sowie 4-150 Harnstoffgruppen auf.

In einer typischen Ausführungsform der Erfindung liegen 50 - 100 Gew.-% der Harnstoffverbindung (B) jeweils vor gemäß einer der allgemeinen Formeln ausgewählt aus der Gruppe bestehend aus (IIIa), (IIIb), (IIIc) und (IIId) 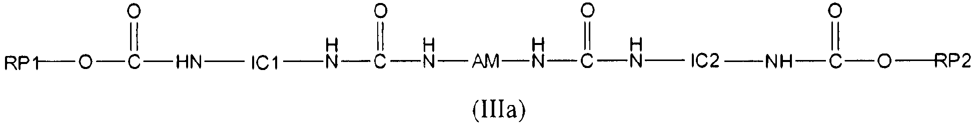 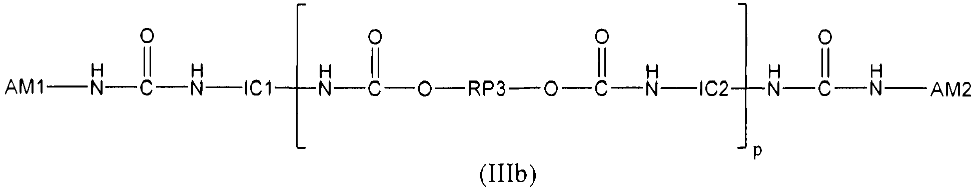 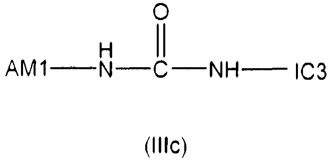 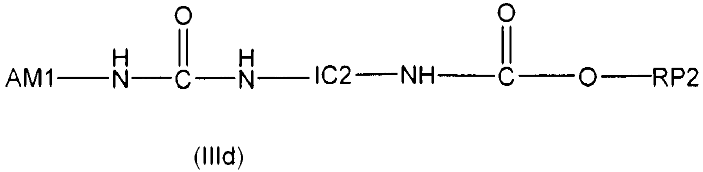 mit
AM gleich oder verschieden sowie repräsentiert durch einen linearen oder verzweigten, gesättigten oder ungesättigten, aliphatischen, aromatischen oder aliphatisch-aromatischen organischen Rest mit 2 bis 50 C-Atomen,
AM1 sowie AM2 jeweils gleich oder verschieden sowie jeweils unabhängig voneinader repräsentiert durch einen linearen oder verzweigten, gesättigten oder ungesättigten, aliphatischen, aromatischen oder aliphatisch-aromatischen organischen Rest mit 1 bis 50 C-Atomen, wobei dieser organische Rest auch weitere funktionelle Gruppen wie Hydroxy- oder Aminofunktionen aufweisen kann,
IC1 sowie IC2 jeweils gleich oder verschieden sowie jeweils unabhängig voneinader repräsentiert durch einen linearen oder verzweigten, gesättigten oder ungesättigten, aliphatischen, aromatischen oder aliphatisch-aromatischen Kohlenwasserstoffrest mit 2 bis 40 C-Atomen,
IC3 gleich oder verschieden sowie repräsentiert durch einen linearen oder verzweigten, gesättigten oder ungesättigten, aliphatischen, aromatischen oder aliphatisch-aromatischen Kohlenwasserstoffrest mit 2 bis 24 Kohlenstoffatomen,
RP1 sowie RP2 jeweils gleich oder verschieden sowie jeweils unabhängig voneinader repräsentiert durch einen linearen oder verzweigten, gesättigten oder ungesättigten, aliphatischen, aromatischen oder aliphatisch-aromatischen organischen Rest mit 1 bis 24 C-Atomen und/ oder durch einen Polyetherrest mit 1 bis 120 Ethersauerstoffatomen und/ oder durch einen optional Ethergruppen enthaltenden Polyesterrest mit 1 bis 100 Estergruppen und/ oder durch einen Polyamidrest mit 1 bis 100 Amidgruppen und/ oder durch einen Polysiloxanrest mit 3 bis 100 Siliziumatomen,
RP3 gleich oder verschieden sowie repräsentiert durch einen linearen oder verzweigten, gesättigten oder ungesättigten, aliphatischen, aromatischen oder aliphatisch-aromatischen Kohlenwasserstoffrest mit 2 bis 24 C-Atomen und/ oder durch einen (Poly)etherrest mit 1 bis 120 Ethersauerstoffatomen und/ oder durch einen Polyamidrest mit 1 bis 100 Amidgruppen und/ oder durch einen Polysiloxanrest mit 3 bis 100 Siliziumatomen und/oder durch einen optional Ethergruppen enthaltender Polyesterrest mit 1 bis 100 Estergruppen und
p gleich oder verschieden sowie repräsentiert durch 0 und/ oder 1.

Dann liegen bevorzugt 70 - 100 Gew.-% der Harnstoffverbindung (B) jeweils vor gemäß einer der allgemeinen Formeln ausgewählt aus der Gruppe bestehend aus (IIIa), (IIIb), (IIIb) und (IIId), wobei
AM gleich oder verschieden ist sowie ausgewählt ist aus der Gruppe bestehend aus 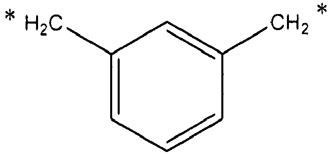 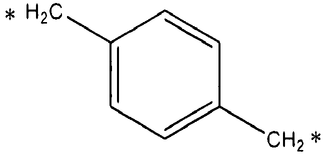 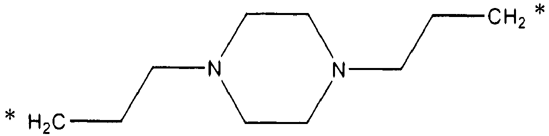 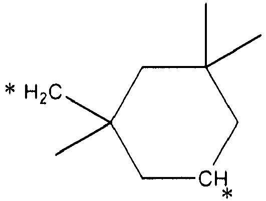 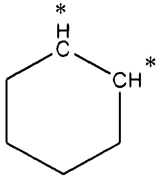 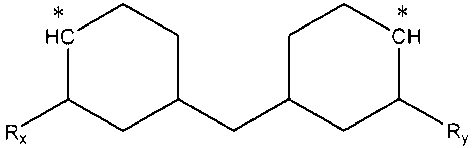 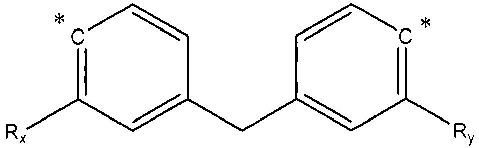
mit Rₓ und R_{y} gleich oder verschieden sowie jeweils unabhängig repräsentiert durch CH₃ und/ oder Wasserstoff, (CH₂)_{q}
mit q gleich oder verschieden sowie repräsentiert durch eine ganze Zahl von 2 bis 12 ,
AM1 und AM2 jeweils gleich oder verschieden sowie ausgewählt sind aus der Gruppe bestehend aus n-Propyl, Isopropyl, Butyl, Isobutyl, tert-Butyl, Lauryl, Oleyl, Stearyl, Polyisobutylen und Polyether mit 2 bis 40 Ethersauerstoffatomen, Benzyl, Methylbenzyl, Cyclohexyl, Carboxyalkyl, Hydroxyalkyl und Alkylalkoxysilan.

IC1 und IC2 jeweils gleich oder verschieden sowie ausgewählt sind aus der Gruppe bestehend aus

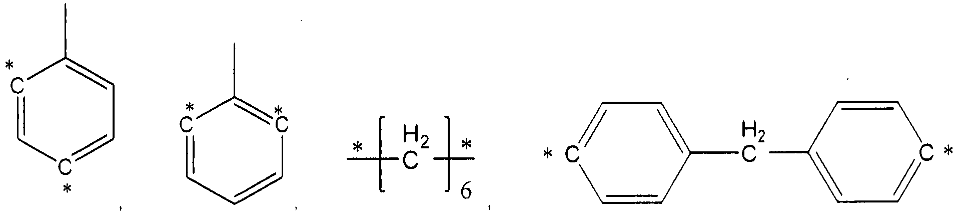

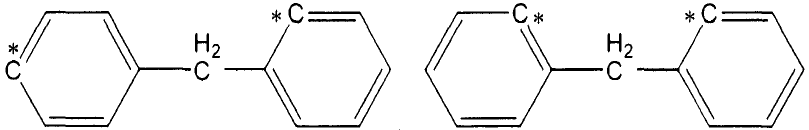

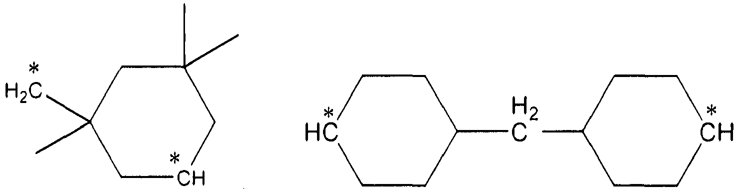

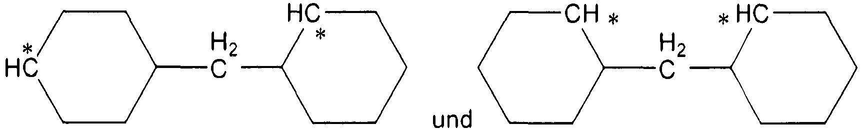

IC3 gleich oder verschieden sowie ausgewählt ist aus der Gruppe bestehend aus Methyl, Ethyl, Phenyl, Benzyl, Cyclohexyl und Stearyl,

RP1 und RP2 jeweils gleich oder verschieden sowie ausgewählt sind aus der Gruppe bestehend aus verzweigtem oder unverzweigtem C1- bis C18-Alkyl, Oleyl, Benzyl, Allyl, bevorzugt Struktureinheiten von Ethylenoxid, Propylenoxid und/ oder Butylenoxid enthaltender Polyetherrest und Struktureinheiten von Epsilon-Caprolacton und/ oder Delta-Valerolacton enthaltender Polyesterrest,

RP3 gleich oder verschieden sowie ausgewählt ist aus der Gruppe bestehend aus linearem oder verweigtem C1- bis C18-Alkylen, linearem oder verweigtem C2- bis C18-Alkenylen, bevorzugt Struktureinheiten von Ethylenoxid, Propylenoxid und/ oder Butylenoxid enthaltender Polyether mit 1 bis 25 Ethersauerstoffatomen.

In einer speziellen Ausführungsform sind 70 - 100 Gew.-% der Harnstoffverbindung (B) jeweils durch Umsetzung von durch Isocyanurat- und/oder Uretdionbildung oligomerisierten Isocyanaten mit monofunktionellen Aminen herstellbar.

In einer besonderen Ausführungsform der Erfindung enthält 95 - 100 Gew.-%, bevorzugt 98 - 100 Gew.-% der Harnstoffverbindung (B) jeweils mindestens
ein Molekülsegment der allgemeinen Formel (IVa)

-O-CO-NH-Y₁-NH-CO-NH- (IVa)

mit
Y₁ gleich oder verschieden sowie repräsentiert durch einen 6 bis 20 Kohlenstoffatome enthaltenden gesättigten oder ungesättigten, verzweigten oder unverzweigten Kohlenwasserstoffrest,
und jeweils kein Molekülsegment der allgemeinen Formel (IVb)

-O-CO-NH-Y₂-NH-CO-O- (IVb)

mit
Y₂ gleich oder verschieden sowie repräsentiert durch einen 6 bis 20 Kohlenstoffatome enthaltenden gesättigten oder ungesättigten, verzweigten oder unverzweigten Kohlenwasserstoffrest.

Die Herstellung der Harnstoffverbindungen (B) kann in bekannter Weise durch Umsetzung entsprechender Isocyanate mit Aminen erfolgen. Herstellverfahren für solche Harnstoffverbindungen werden z.B. näher beschrieben in EP 0006252, DE 2822908, DE 10241853, DE 19919482, EP 1188779, DE 102008059702. Die Herstellung inbesondere höhermolekularer Polyharnstoffverbindungen wird z.B. in EP 2292675 offengelegt. Bevorzugt findet die Herstellung der Harnstoffverbindung (B) auch gemäß dieser benannten Herstellverfahren statt; bevorzugte Kompositionen zur Rheologiesteuerung sind daher auch solche, bei denen die Harnstoffkomponente (B) gemäß einem solchen Herstellverfahren erhalten wurde.

In einer Ausführungsform der Erfindung enthält die erfindungsgemäße Komposition 0,5 - 4,0 Gew.-% der ionogenen Verbindung (C), wobei 50 - 100 Gew.- % der ionogenen Verbindung (C) als Salze von Kationen der Hauptgruppen I und II (Alkali- und Erdalkalimetalle) oder von Ammoniumionen, bevorzugt als Lithium-, Calcium- oder Magnesiumsalze, besonders bevorzugt als Lithium- oder Calciumsalz vorliegt, und als Anion der ionogenen Verbindung bevorzugt ein einwertiges Anion, insbesondere bevorzugt ein Halogenid, Pseudohalogenid, Formiat, Acetat und/ oder Nitrat, ganz besonders bevorzugt ein Chlorid, Acetat und/ oder Nitrat, vorliegt.

Die erfindungsgemäße Komposition eignet sich bevorzugt zur Rheologiesteuerung, insbesondere zur Thixotropierung, von flüssigen Systemen.

Die Erfindung betrifft außerdem die Verwendung der erfindungsgemäßen Komposition zur Rheologiesteuerung, insbesondere zur Thixotropierung, einer flüssigen Mischung. Diese flüssige Mischung liegt bevorzugt vor als Beschichtung, insbesondere als Lack, als Kunststoffformulierung, als Pigmentpaste, als Dichtstoffformulierung, als Kosmetika, als Keramikformulierung, als Klebstoffformulierung, als Vergussmasse, als Baustoffformulierung, als Schmierstoff, als Spachtelmasse, als Druckfarbe oder als Tinte (z.B. als Inkjet-Tinte).

Schließlich betrifft die vorliegende Erfindung eine Zubereitung, die als Lack, als Kunststoffformulierung, als Pigmentpaste, als Dichtstoffformulierung, als Kosmetika, als Keramikformulierung, als Klebstoffformulierung, als Vergussmasse, als Baustoffformulierung, als Schmierstoff, als Spachtelmasse, als Druckfarbe oder als Tinte vorliegt und welcher 0,1 bis 7,5 Gew.% der erfindungsgemäßen Komposition zugesetzt worden ist. Eine besonders bevorzugte Ausführungsform der Erfindung betrifft eine entsprechende Zubereitung, welcher 0,2 bis 5 Gew.%, besonders bevorzugt 0,3 bis 4 Gew,%, der erfindungsgemäßen Komposition zugesetzt worden ist.

Besonders bevorzugt ist hierbei die Verwendung der erfindungsgemäßen Komposition als Rheologiesteuerungsmittel, bevorzugt als Thixotropiemittel, zur Rheologiesteuerung von Lacken, Druckfarben, Tinten (wie z.B. Inkjettinten), Kunststoff-Formulierungen, Kosmetikzubereitungen, Baustoff-Formulierungen, Schmierstoffen und/oder Klebstoffen.

Bei den Lacken, Druckfarben und (Inkjet)tinten kann es sich sowohl um lösemittelhaltige als auch lösemittelfreie oder wasserbasierte Lacke, Druckfarben und Inkjettinten handeln. Lacke sind in unterschiedlichsten Anwendungsfeldern einsetzbar, unter anderem im Bereich Automobillacke, Bautenlacke, Schutzlacke (u.a. Lackierung von Schiffen und Brücken), Can- und Coil-Lacke, Holz- und Möbellacke, Industrielacke, Kunststofflackierungen, Drahtlacke, Beschichtungen von Lebensmitteln und Saatgut sowie auch als sog. Color Resists, welche für Farbfilter z.B. in LC-Displays eingesetzt werden. Der Anwendungsbereich Lacke umfasst auch pastöse Materialien, welche in der Regel einen sehr hohen Anteil von Feststoff und einen geringen Anteil von flüssigen Komponenten aufweisen, z.B. sog. Pigmentpasten oder auch Pasten auf Basis von feinverteilten Metallteilchen oder Metallpulvern (beispielsweise auf Basis von Silber, Kupfer, Zink, Aluminum, Bronze, Messing).

Bei den Kunststoff-Formulierungen kann es sich um die (flüssigen) Ausgangsmaterialien zur Herstellung von Kunststoff-Materialien handeln, die bevorzugt durch einen chemischen Vernetzungsprozess ("Härtung" zu einem Duromer) umgesetzt werden. Bevorzugte Kunststoffzubereitungen sind daher ungesättigte Polyesterharze, Vinylesterharze, Acrylatharze, Epoxidharze, Polyurethanharze, Formaldehydharze (wie Melamin-Formaldehyd oder Harnstoff-Formaldehyd). Diese können unter unterschiedlichsten Bedingungen ausgehärtet werden, so z.B. bei Raumtemperatur (kalthärtende Systeme) oder bei erhöhter Temperatur (heißhärtende Systeme), ggf. auch unter Aufbringung von Druck ("Closed Mold"-Applikation, Sheet Molding Compound oder Bulk Molding Compound). Zu den bevorzugten Kunststoff-Formulierungen zählen auch PVC-Plastisole.

Bei den Kosmetikzubereitungen kann es sich um mannigfaltige flüssige Kompositionen handeln, die im sog. Personal Care- oder auch Health Care-Bereich eingesetzt werden, so z.B. Lotionen, Cremes, Pasten (z.B. Zahnpasta), Schäume (z.B. Rasierschaum), Gele (z.B. Rasiergel, Duschgel, Arzneiwirkstoffe in gelförmiger Formulierung), Haarshampoo, Flüssigseifen, Nagellacke, Lippenstifte, Haarfärbemittel.

Bei den Baustoff-Formulierungen kann es sich um bei Verarbeitung flüssige oder pastöse Materialien handeln, die im Bausektor eingesetzt werden und nach Aushärtung fest werden, so z.B. hydraulische Bindemittel wie Beton, Zement, Mörtel, Fliesenkleber, Gips.

Bei den Schmierstoffen handelt es sich um Mittel, welche zur Schmierung eingesetzt werden, d.h. die der Verringerung von Reibung und Verschleiß, sowie der Kraftübertragung, Kühlung, Schwingungsdämpfung, Dichtwirkung und dem Korrosionsschutz dienen, wobei hier flüssige Schmierstoffe und Schmierfette bevorzugt sind. Auch Gleitmittel und Bohrspülmittel ("drilling fluids", wie sie in der Erdölförderung eingesetzt werden) zählen definitionsgemäß zu den Schmierstoffen.

Bei den Klebstoffen kann es sich um alle unter Verarbeitungsbedingungen flüssigen Prozesswerkstoffe handeln, welche Fügeteile durch Flächenhaftung und innere Festigkeit verbinden können. Klebstoffe können lösemittelhaltig, lösemittelfrei oder wasserbasiert sein.

Nachstehend soll die vorliegende Erfindung zusätzlich anhand von Beispielen näher erläutert werden.

### Beispiele

### Synthese der Rheologiesteuerungsmittel

**Verwendete Rohstoffe bei der Synthese:**

| | |
|---|---|
| Desmodur T80 | 2,4-/2,6-Diisocyanat-toluol-Isomerengemisch, Firma Bayer AG |
| DesmodurT65 | 2,4-/2,6-Diisocyanat-toluol-Isomerengemisch, Firma Bayer AG |
| Polyglycol B11/50 | Statistischer Ethylenoxid/Propylenoxid-Copolymerisat-Monobutylether mit einer Hydroxylzahl (DIN 53240) von 33 mg KOH/g, Firma Clariant |
| DMSO | Dimethylsulfoxid, Firma Merck KGaA |

### Bestimmung des Molekulargewichts:

Das gewichts mittlere Molekulargewicht ist das Gewichtsmittel der mittels Gelpermeationschromatographie (GPC) bestimmten Molmassenverteilung. Die Molmassenverteilung wird gemäß DIN 55672 Teil 2 bestimmt. Als Eluent wird eine Lösung von Lithiumbromid (Gehalt 5 g/L) in Dimethylacetamid verwendet. Zur Kalibrierung werden eng verteilte, linear aufgebaute Polymethylmethacrylat-Standards mit Molekulargewichten zwischen 1000000 und 102 g/mol verwendet. Die Temperatur des gesamten GPC-Systems (Injektor, Probenteller, Detektoren und Säulen) beträgt 80°C.

Die Prozentangaben sind, soweit nichts anderes angegeben ist, Gewichtsprozente. Mit dem Begriff "Harnstoffverbindung" werden jeweils die erfindungsgemäßen Harnstoff-Verbindungen (B) bezeichnet.

### Vergleichsbeispiel A-V1 (gemäß Stand der Technik)

### Stufe 1:

In einem Reaktionsgefäß (Rundkolben mit Rührer, Rückflusskühler und Tropftrichter) werden unter Stickstoffatmosphäre 69,6 g (0,4 mol) Desmodur T80 vorgelegt und 145,6 g (0,2 mol) eines Polyesters aus 5 mol ε-Caprolacton und 1 mol 1-Decanol unter Rühren innerhalb von 45 Minuten zudosiert. Die Temperatur wird dabei unterhalb 45 °C gehalten. Nach beendeter Zugabe wird weitere 2 Stunden bei 60°C gerührt.

### Stufe 2:

In einem zweiten Reaktionsgefäß (Rundkolben mit Rührer, Rückflusskühler und Tropftrichter) werden unter Stickstoffatmosphäre und Rühren 12,6 g (0,3 mol) LiCl in 1075,6 g N-Ethylpyrrolidon gelöst. Danach werden 41,1 g (0,3 mol) meta-Xylylendiamin zugegeben und die Lösung auf 60 °C erwärmt. Anschließend wird das komplette in Stufe 1 erhaltene Reaktionsgemisch unter Rühren innerhalb von 90 Minuten so zugetropft, dass die Temperatur nicht über 65 °C steigt. Zur Vervollständigung der Reaktion wird das Reaktionsgemisch für 3 Stunden bei 60 °C gerührt. Es wird ein klares, farbloses und viskoses Produkt erhalten. Das gewichtsmittlere Molekulargewicht beträgt 12500 g/mol.

### Vergleichsbeispiel A-V2 (gemäß Stand der Technik):

### Stufe 1:

Zunächst wird ein Isocyanat-Monoaddukt gemäß der Patentschrift EP 1188779 aus Desmodur T80 und Polyglycol B11/50 hergestellt.

### Stufe 2:

In einem Reaktionsgefäß (Rundkolben mit Rührer, Rückflusskühler und Tropftrichter) werden unter Stickstoffatmosphäre und Rühren 3,8 g (0,09 mol) LiCl in 250,8 g DMSO gelöst. Danach werden 10,3 g (0,075 mol) meta-Xylylendiamin zugegeben und die klare Mischung auf 60 °C erwärmt. Anschließend wird eine Mischung aus 10,4 g (0,06 mol) Desmodur T65 und 38,2 g (0,03 mol) des Monoaddukts aus Stufe 1 unter Rühren innerhalb von 1 Stunde so zugetropft, dass die Temperatur nicht über 65 °C steigt. Zur Vervollständigung der Reaktion wird das Reaktionsgemisch für 3 Stunden bei 60 °C gerührt. Es wird ein klares, farbloses und flüssiges Produkt erhalten. Das gewichtsmittlere Molekulargewicht beträgt 15000 g/mol.

### Vergleichsbeispiel A-V3:

### Stufe 1:

Zunächst wird ein Isocyanat-Monoaddukt gemäß der Patentschrift EP 1188779 aus Desmodur T80 und einem Butoxypolyalkylenglycol (Polyglycol B11/50, Clariant) hergestellt.

### Stufe 2:

In einem Reaktionsgefäß werden unter Stickstoffatmosphäre und Rühren 3,8 g (0,09 mol) LiCl in 250,8 g 1,1,1,3,3,3-Hexafluorpropan-2-ol gelöst. Danach werden 10,3 g (0,075 mol) meta-Xylylendiamin zugegeben und die klare Mischung auf 60 °C erwärmt. Anschließend wird eine Mischung aus 10,4 g (0,06 mol) Desmodur T65 und 38,2 g (0,03 mol) des Monoaddukts aus Stufe 1 unter Rühren innerhalb von 1 Stunde so zugetropft, dass die Temperatur nicht über 65 °C steigt. Zur Vervollständigung der Reaktion wird das Reaktionsgemisch für 3 Stunden bei 60 °C gerührt. Es wird ein klares, farbloses und flüssiges Produkt erhalten. Das gewichtsmittlere Molekulargewicht beträgt 15000 g/mol.

### Beispiel A1:

### Stufe 1:

In einem Reaktionsgefäß (Rundkolben mit Rührer, Rückflusskühler und Tropftrichter) werden unter Stickstoffatmosphäre 69,6 g (0,4 mol) Desmodur T80 vorgelegt und 145,6 g (0,2 mol) Polyester aus 5 mol ε-Caprolacton und 1 mol 1-Decanol unter Rühren innerhalb von 45 Minuten zudosiert. Die Temperatur wird dabei unterhalb 45 °C gehalten. Nach beendeter Zugabe wird weitere 2 Stunden bei 60°C gerührt.

### Stufe 2:

In einem zweiten Reaktionsgefäß (Rundkolben mit Rührer, Rückflusskühler und Tropftrichter) werden unter Stickstoffatmosphäre und Rühren 12,6 g (0,3 mol) LiCl in 502,3 g Methyl-5-(dimethylamino)-2-methyl-5-oxopentanoat und 573,3 g N-Ethylpyrrolidon gelöst. Danach werden 41,1 g (0,3 mol) meta-Xylylendiamin zugegeben und die Lösung auf 60 °C erwärmt. Anschließend wird das in Stufe 1 erhaltene Reaktionsgemisch unter Rühren innerhalb von 90 Minuten zugetropft, so dass die Temperatur nicht über 65 °C steigt. Zur Vervollständigung der Reaktion wird das Reaktionsgemisch für 3 Stunden bei 60 °C gerührt. Es wird ein klares, farbloses und viskoses Produkt erhalten. Das gewichtsmittlere Molekulargewicht beträgt 12500 g/mol.

### Beispiel A2:

### Stufe 1:

In einem Reaktionsgefäß (Rundkolben mit Rührer, Rückflusskühler und Tropftrichter) werden unter Stickstoffatmosphäre 69,6 g (0,4 mol) Desmodur T80 vorgelegt und 145,6 g (0,2 mol) Polyester aus 5 mol ε-Caprolacton und 1 mol 1-Decanol unter Rühren innerhalb von 45 Minuten zudosiert. Die Temperatur wird dabei unterhalb von 45 °C gehalten. Nach beendeter Zugabe wird weitere 2 Stunden bei 60°C gerührt.

### Stufe 2:

In einem zweiten Reaktionsgefäß werden unter Stickstoffatmosphäre und Rühren 12,6g (0,3 mol) LiCl in 574,8 g Methyl-5-(dimethylamino)-2-methyl-5-oxopentanoat und 500,8 g DMSO gelöst. Danach werden 41,1 g (0,3 mol) meta-Xylylendiamin zugegeben und die Lösung auf 60 °C erwärmt. Anschließend wird das in Stufe 1 erhaltene Reaktionsgemisch unter Rühren innerhalb von 90 Minuten zugetropft, so dass die Temperatur nicht über 65 °C steigt. Zur Vervollständigung der Reaktion wird das Reaktionsgemisch für 3 Stunden bei 60 °C gerührt. Es wird ein klares, farbloses und viskoses Produkt erhalten. Das gewichtsmittlere Molekulargewicht beträgt 12500 g/mol.

### Beispiel A3:

### Stufe 1:

Zunächst wird ein Isocyanat-Monoaddukt gemäß der Patentschrift EP 1188779 aus Desmodur T80 und einem Butoxypolyalkylenglycol (Polyglycol B11/50, Clariant) hergestellt.

### Stufe 2:

In einem Reaktionsgefäß werden unter Stickstoffatmosphäre und Rühren 3,8 g (0,09 mol) LiCl in 133,7 g Acetylmorpholin und 117,1 g Dimethylsulfoxid gelöst. Danach werden 10,3 g (0,075 mol) meta-Xylylendiamin zugegeben und die klare Mischung auf 60 °C erwärmt. Anschließend wird eine Mischung aus 10,4 g (0,06 mol) Desmodur T65 und 38,2 g (0,03 mol) des Monoaddukts aus Stufe 1 unter Rühren innerhalb von 1 Stunde so zugetropft, dass die Temperatur nicht über 65 °C steigt. Zur Vervollständigung der Reaktion wird das Reaktionsgemisch für 3 Stunden bei 60 °C gerührt. Es wird ein klares, farbloses und flüssiges Produkt erhalten. Das gewichtsmittlere Molekulargewicht beträgt 15000 g/mol.

### Vergleichsbeispiel B-V1 (gemäß Stand der Technik):

### Stufe 1:

Zunächst werden 25,74 g eines Düsocyanat-Monoaddukts gemäß der Patentschrift EP 1188779 aus 15,3 g Polyethylenglycolmonobutylether mit einer Hydroxylzahl von 220 mg KOH/g (bestimmt gemäß DIN / ISO 4629) und 20,88 g eines Gemisches aus 15% 2,4-Toluylendüsocyanat und 85% 2,6-Toluylendüsocyanat hergestellt.

### Stufe 2:

Ein Vierhalskolben wird mit Rührer, Tropftrichter, Thermometer und Rückflußkühler versehen. Es werden 48,6 g 1-Dodecylpyrrolidin-2-on vorgelegt und unter Stickstoffatmosphäre unter Rühren auf 120°C erwärmt. 2,58 g Lithiumchlorid werden zugegeben und bei dieser Temperatur unter Rühren in 1 Stunde gelöst. Anschließend wird Temperatur auf 80°C gesenkt. Es werden 4,08 g m-Xylylendiamin zugegeben und die Mischung homogenisiert.

Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein klares, farbloses und leicht viskoses Produkt erhalten. Die Aminzahl liegt unter 2 mg KOH/g (bestimmt gemäß DIN 16945).

### Vergleichsbeispiel B-V2 (gemäß Stand der Technik):

### Stufe 1

Ein Vierhalskolben wird mit Rührer, Tropftrichter, Thermometer und Rückflußkühler versehen. Es werden 74,47 g eines Isocyanatgemischs aus 30% 2,4-Toluylendüsocyanat und 70% 2,6-Toluylendiisocyanat bei 25°C unter Stickstoffatmosphäre vorgelegt und 136,96 g eines Polyethylenglycolmonobutylethers mit einer Hydroxylzahl von 175 mg KOH/g (bestimmt gemäß DIN / ISO 4629) innerhalb von 90 Minuten unter Rühren so zudosiert, dass die Temperatur 30°C nicht überschreitet.

Nach 3 Stunden Nachreaktionszeit bei 30°C entsteht eine helle viskose Flüssigkeit mit einem NCO-Gehalt von 8,35% (bestimmt gemäß DIN EN ISO 9369).

### Stufe 2

In einem zweiten analogen Reaktionsgefäß werden 393,7 g N-Ethylpyrrolidon unter Rühren auf 80°C erwärmt. Bei Erreichen der Temperatur werden 21,93 g Lithiumchlorid zugegeben und unter Rühren in 1 Stunde gelöst.

Anschließend werden 29,1 g m-Xylylendiamin zugegeben und homogenisiert. Das vorab (Stufe 1) hergestellte Isocyanataddukt wird unter Rühren innerhalb 1 Stunde zu der Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein leicht trübes, farbloses Produkt erhalten. Die Aminzahl liegt unter 2 mg KOH/g (bestimmt gemäß DIN 16945).

### Vergleichsbeispiel B-V3 (gemäß Stand der Technik):

### Stufe 1

Zunächst werden gemäß der Patentschrift EP 1188779 64,86 g eines Monoaddukts aus einem Polyethylenglycolmonobutylether mit einer Hydroxylzahl von 220 mg KOH/g und einem Gemisch aus 30% 2,4-Toluylendiisocyanat und 70% 2,6-Toluylendüsocyanat hergestellt.

### Stufe 2

Desweiteren werden 27,8 g eines Monoadduktes aus einem Polyethylenglycolmonoethylether mit einer Hydroxylzahl von 220 mg KOH/g und einem Gemisch aus 30% 2,4-Toluylendüsocyanat und 70% 2,6-Toluylendiisocyanat gemäß der Patentschrift EP 1188779 hergestellt. Stufe 1 und Stufe 2 werden anschließend gemischt.

### Stufe 3

In einem Vierhalskolben mit Rührer, Tropftrichter, Thermometer und Rückflußkühler werden 168,0 g N-Ethylpyrrolidon unter Rühren auf 80°C erwärmt. Bei Erreichen der Temperatur werden 4,64 g Lithiumchlorid zugeben und danach 1 Stunde unter Rühren bei 80°C gelöst.

Anschließend werden 14,69 g m-Xylylendiamin zugegeben und homogenisiert.

Das vorab hergestellte Isocyanatadduktgemisch (Stufe 1 + Stufe 2) wird unter Rühren innerhalb 1 Stunde zur Aminlösung so langsam zugetropft, dass die Temperatur 85°C nicht überschreitet.

Zur Vervollständigung der Reaktion wird das Reaktionsgemisch 3 Stunden bei 80 °C gerührt. Es wird ein klares, farbloses und leicht viskoses Produkt erhalten. Die Aminzahl liegt unter 2 mg KOH/g (bestimmt gemäß DIN 16945).

### Vergleichsbeispiel B-V4 (gemäß Stand der Technik):

### Stufe 1

Zunächst werden 436,8 g eines Monoaddukts gemäß der Patentschrift EP 1188779 aus einem Polyethylenglycolmonomethylether mit einer OH-Zahl von 125 und einem Gemisch aus 35% 2,4-Toluylendiisocyanat und 65% 2,6-Toluylendüsocyanat hergestellt.

### Stufe 2

In einem Vierhalskolben mit Rührer, Tropftrichter, Thermometer und Rückflußkühler werden 1195,48 g Dimethylsulfoxid unter Rühren auf 120°C erwärmt und bei Erreichen der Temperatur mit 27,95 g Lithiumchlorid versetzt. Das Lithiumchlorid wird danach innerhalb 1 Stunde bei 120°C unter Rühren gelöst. Anschließend wird die Temperatur auf 80°C gesenkt

Es werden 47,60 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85°C nicht überschreitet. Zur Vervollständigung der Reaktion wird das Reaktionsgemisch für 3 Stunden bei 80°C gerührt. Es wird ein klares, gelbliches und leicht viskoses Produkt erhalten. Die Aminzahl liegt unter 2 mg KOH/g (bestimmt gemäß DIN 16945).

### Vergleichsbeispiel B-V5 (gemäß Stand der Technik):

### Stufe 1

Zunächst werden 90,00 g eines Monoaddukts gemäß der Patentschrift EP 1188779 aus Laurylalkohol und 2,6-Toluylendiisocyanat hergestellt. Das Reaktionsprodukt ist wachsartig und hat einen NCO-Gehalt von 11,1 %.

### Stufe 2

In einem Vierhalskolben mit Rührer, Tropftrichter, Thermometer und Rückflußkühler werden 496,9 g N-Ethylpyrrolidon unter Rühren auf 80°C erwärmt. Bei Erreichen der Temperatur werden 17,2 g Lithiumchlorid zugegeben und danach in 1 Stunde unter Rühren gelöst. Anschließend wird Temperatur auf 80°C gesenkt. Es werden 17,0 g m-Xylylendiamin zugegeben und homogenisiert. Das vorab hergestellte Isocyanataddukt (Stufe 1) wird geschmolzen und unter Rühren innerhalb 1 Stunde so langsam zur Aminlösung zugetropft, dass die Temperatur 85°C nicht überschreitet. Zur Vervollständigung der Reaktion wird das Reaktionsgemisch noch 3 Stunden bei 80°C gerührt. Es wird ein klares, bräunliches Produkt erhalten. Die Aminzahl liegt unter 2 mg KOH/g (bestimmt gemäß DIN 16945).

### Vergleichsbeispiel B-V6 (gemäß Stand der Technik):

In einem Vierhalskolben mit Rührer, Tropftrichter, Thermometer und Rückflußkühler werden 273 g N-Methylpyrrolidon auf 80°C erwärmt, mit 21,5 g Lithiumchlorid versetzt und 1 Stunde lang gerührt. Die Lithiumchloridlösung ist klar.

Anschließend wird die Temperatur auf 60°C gesenkt und die Lithiumchloridlösung wird mit 53,5 g Benzylamin versetzt und homogenisiert. Nach 5 Minuten werden 42,0 g Hexamethylendiisocyanat so langsam zur Aminlösung zugetropft, dass die Temperatur nicht über 65°C steigt. Zur Vervollständigung der Reaktion wird das Reaktionsgemisch noch 3 Stunden bei 80°C gerührt. Es wird ein gelbes, niedrigviskoses Produkt erhalten. Die Aminzahl liegt unter 2 mg KOH/g (bestimmt gemäß DIN 16945).

### Vergleichsbeispiel B-V7 (gemäß Stand der Technik):

### Stufe 1

In einem Vierhalskolben mit Rührer, Tropftrichter, Thermometer und Rückflußkühler werden 17,4 g 2,6-Toluylendüsocyanat bei 20°C vorgelegt und 107,8 g eines Butoxypoly(ethylenglycol-co-propylenglycol) mit einem Ethylenoxid/Propylenoxid-Verhältnis von 1:1 und mit einer Hydroxylzahl von 52 mg KOH/g innerhalb von 90 Minuten unter Rühren so zudosiert, dass die Temperatur 30°C nicht überschreitet. Nach 3 Stunden Nachreaktionszeit entsteht eine helle viskose Flüssigkeit mit einem NCO-Gehalt von 3,1%.

### Stufe 2

In einem Vierhalskolben mit Rührer, Tropftrichter, Thermometer und Rückflußkühler werden 165,2 g Dimethylsulfoxid unter Rühren auf 80°C erwärmt. Bei Erreichen der Temperatur werden 2,15 g Lithiumchlorid zugesetzt und danach in 1 Stunde unter Rühren gelöst.

Anschließend wird die Temperatur auf 80°C gesenkt. Es werden 8,4 g Hexamethylendiamin zugegeben und die Mischung homogenisiert. Das vorab hergestellte Isocyanataddukt (Stufe 1) wird unter Rühren innerhalb 1 Stunde so langsam zugetropft, dass die Temperatur 85°C nicht überschreitet. Zur Vervollständigung der Reaktion wird das Reaktionsgemisch für 3 Stunden bei 80°C gerührt. Es wird ein klares, farbloses und leicht viskoses Produkt erhalten. Die Aminzahl liegt unter 2 mg KOH/g (bestimmt gemäß DIN 16945).

### Beispiel B1

### Stufe 1:

Zunächst werden 25,74 g eines Düsocyanat-Monoaddukts gemäß der Patentschrift EP 1188779 aus 15,3 g Polyethylenglycolmonobutylether mit einer Hydroxylzahl von 220 mg KOH/g (bestimmt analog zu DIN / ISO 4629) und 20,88 g eines Gemisches aus 15% 2,4-Toluylendiisocyanat und 85% 2,6-Toluylendiisocyanat hergestellt.

### Stufe 2:

Ein Vierhalskolben wird mit Rührer, Tropftrichter, Thermometer und Rückflußkühler versehen. Es werden 8,1 g 1-Dodecylpyrrolidin-2-on und 40,5 g Acetylmorpholin vorgelegt und unter Stickstoffatmosphäre unter Rühren auf 120°C erwärmt. 2,58 g Lithiumchlorid werden zugegeben und bei dieser Temperatur unter Rühren in 1 Stunde gelöst. Anschließend wird Temperatur auf 80°C gesenkt. Es werden 4,08 g m-Xylylendiamin zugegeben und die Mischung homogenisiert.

Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein klares, farbloses und leicht viskoses Produkt erhalten. Die Aminzahl liegt unter 2 mg KOH/g (bestimmt gemäß DIN 16945).

### Beispiel B2

### Stufe 1

Ein Vierhalskolben wird mit Rührer, Tropftrichter, Thermometer und Rückflußkühler versehen. Es werden 74,47 g eines Isocyanatgemischs aus 30% 2,4-Toluylendüsocyanat und 70% 2,6-Toluylendiisocyanat bei 25°C unter Stickstoffatmosphäre vorgelegt und 136,96 g eines Polyethylenglycolmonobutylethers mit einer Hydroxylzahl von 175 mg KOH/g (bestimmt gemäß DIN / ISO 4629) innerhalb von 90 Minuten unter Rühren so zudosiert, dass die Temperatur 30°C nicht überschreitet.

Nach 3 Stunden Nachreaktionszeit bei 30°C entsteht eine helle viskose Flüssigkeit mit einem NCO-Gehalt von 8,35% (bestimmt gemäß DIN EN ISO 9369).

### Stufe 2

In einem zweiten analogen Reaktionsgefäß werden 164,04 g N-Ethylpyrrolidon und 229,66 g Formylmorpholin unter Rühren auf 80°C erwärmt. Bei Erreichen der Temperatur werden 21,93 g Lithiumchlorid zugegeben und unter Rühren in 1 Stunde gelöst.

Anschließend werden 29,1 g m-Xylylendiamin zugegeben und homogenisiert. Das vorab (Stufe 1) hergestellte Isocyanataddukt wird unter Rühren innerhalb 1 Stunde zu der Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein leicht trübes, farbloses Produkt erhalten. Die Aminzahl liegt unter 2 mg KOH/g (bestimmt gemäß DIN 16945).

### Beispiel B3

### Stufe 1

Zunächst werden gemäß der Patentschrift EP 1188779 64,86 g eines Monoaddukts aus einem Polyethylenglycolmonobutylether mit einer Hydroxylzahl von 220 mg KOH/g und einem Gemisch aus 30% 2,4-Toluylendüsocyanat und 70% 2,6-Toluylendiisocyanat hergestellt.

### Stufe 2

Desweiteren werden 27,8 g eines Monoadduktes aus einem Polyethylenglycolmonoethylether mit einer Hydroxylzahl von 220 mg KOH/g und einem Gemisch aus 30% 2,4-Toluylendüsocyanat und 70% 2,6-Toluylendiisocyanat gemäß der Patentschrift EP 1188779 hergestellt. Stufe 1 und Stufe 2 werden anschließend gemischt.

### Stufe 3

In einem Vierhalskolben mit Rührer, Tropftrichter, Thermometer und Rückflußkühler werden 84,0 g N-Ethylpyrrolidon und 84 g Methyl-5-(dimethylamino)-2-methyl-5-oxopentanoat unter Rühren auf 80°C erwärmt. Bei Erreichen der Temperatur werden 4,64 g Lithiumchlorid zugeben und danach 1 Stunde unter Rühren bei 80°C gelöst. Anschließend werden 14,69 g m-Xylylendiamin zugegeben und homogenisiert. Das vorab hergestellte Isocyanatadduktgemisch (Stufe 1 + Stufe 2) wird unter Rühren innerhalb 1 Stunde zur Aminlösung so langsam zugetropft, dass die Temperatur 85°C nicht überschreitet.

Zur Vervollständigung der Reaktion wird das Reaktionsgemisch 3 Stunden bei 80 °C gerührt. Es wird ein klares, farbloses und leicht viskoses Produkt erhalten. Die Aminzahl liegt unter 2 mg KOH/g (bestimmt gemäß DIN 16945).

### Beispiel B4

### Stufe 1

Zunächst werden 436,8 g eines Monoaddukts gemäß der Patentschrift EP 1188779 aus einem Polyethylenglycolmonomethylether mit einer OH-Zahl von 125 und einem Gemisch aus 35% 2,4-Toluylendüsocyanat und 65% 2,6-Toluylendiisocyanat hergestellt.

### Stufe 2

In einem Vierhalskolben mit Rührer, Tropftrichter, Thermometer und Rückflußkühler werden 341,57 g Dimethylsulfoxid, 341,57 g Methyl-5-(dimethylamino)-2-methyl-5-oxopentanoat und 312,35 g Acetylmorpholin unter Rühren auf 120°C erwärmt und bei Erreichen der Temperatur mit 27,95 g Lithiumchlorid versetzt. Das Lithiumchlorid wird danach innerhalb 1 Stunde bei 120°C unter Rühren gelöst. Anschließend wird die Temperatur auf 80°C gesenkt

Es werden 47,60 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85°C nicht überschreitet. Zur Vervollständigung der Reaktion wird das Reaktionsgemisch für 3 Stunden bei 80°C gerührt. Es wird ein klares, gelbliches und leicht viskoses Produkt erhalten. Die Aminzahl liegt unter 2 mg KOH/g (bestimmt gemäß DIN 16945).

### Beispiel B5

### Stufe 1

Zunächst werden 436,8 g eines Monoaddukts gemäß der Patentschrift EP 1188779 aus einem Polyethylenglycolmonomethylether mit einer OH-Zahl von 125 und einem Gemisch aus 35% 2,4-Toluylendüsocyanat und 65% 2,6-Toluylendüsocyanat hergestellt.

### Stufe 2

In einem Vierhalskolben mit Rührer, Tropftrichter, Thermometer und Rückflußkühler werden 161,40 g 1-Ethyl-3-methyl-imidazolium-ethylsulfat (Basionic LQ01 von BASF), 807,00 g Methyl 5-(dimethylamino)-2-methyl-5-oxopentanoat und 161,4 g Formylmorpholin unter Rühren auf 80°C erwärmt. Es werden 47,60 g m-Xylylendiamin zugegeben und die Mischung homogenisiert.

Das vorab hergestellte Isocyanataddukt (Stufe 1) wird unter Rühren innerhalb 1 Stunde so langsam zur Aminlösung zugetropft, dass die Temperatur 85°C nicht überschreitet. Zur Vervollständigung der Reaktion wird das Reaktionsgemisch für 3 Stunden bei 80°C gerührt. Es wird ein gelbliches viskoses Produkt erhalten. Die Aminzahl liegt unter 2 mg KOH/g (bestimmt gemäß DIN 16945).

### Beispiel B6

Stufe 1

Zunächst werden 90,00 g eines Monoaddukts gemäß der Patentschrift EP 1188779 aus Laurylalkohol und 2,6-Toluylendüsocyanat hergestellt. Das Reaktionsprodukt ist wachsartig und hat einen NCO-Gehalt von 11,1%.

### Stufe 2

In einem Vierhalskolben mit Rührer, Tropftrichter, Thermometer und Rückflußkühler werden 124,2 g N-Ethylpyrrolidon und 372,6 g Methyl 5-(dimethylamino)-2-methyl-5-oxopentanoat unter Rühren auf 120°C erwärmt. Bei Erreichen der Temperatur werden 17,2 g Lithiumchlorid zugegeben und danach in 1 Stunde unter Rühren gelöst. Anschließend wird Temperatur auf 80°C gesenkt. Es werden 17,0 g m-Xylylendiamin zugegeben und homogenisiert. Das vorab hergestellte Isocyanataddukt (Stufe 1) wird geschmolzen und unter Rühren innerhalb 1 Stunde so langsam zur Aminlösung zugetropft, dass die Temperatur 85°C nicht überschreitet. Zur Vervollständigung der Reaktion wird das Reaktionsgemisch noch 3 Stunden bei 80°C gerührt. Es wird ein klares, bräunliches Produkt erhalten. Die Aminzahl liegt unter 2 mg KOH/g (bestimmt gemäß DIN 16945).

### Beispiel B7

In einem Vierhalskolben mit Rührer, Tropftrichter, Thermometer und Rückflußkühler werden 136,5 g N-Methylpyrrolidon und 136,5 g Methyl 5-(dimethylamino)-2-methyl-5-oxopentanoat auf 120°C erwärmt, mit 21,5 g Lithiumchlorid versetzt und 1 Stunde lang gerührt. Die Lithiumchloridlösung ist klar.

Anschließend wird die Temperatur auf 60°C gesenkt und die Lithiumchloridlösung wird mit 53,5 g Benzylamin versetzt und homogenisiert. Nach 5 Minuten werden 42,0 g Hexamethylendiisocyanat so langsam zur Aminlösung zugetropft, dass die Temperatur nicht über 65°C steigt. Zur Vervollständigung der Reaktion wird das Reaktionsgemisch noch 3 Stunden bei 80°C gerührt. Es wird ein gelbes, niedrigviskoses Produkt erhalten. Die Aminzahl liegt unter 2 mg KOH/g (bestimmt gemäß DIN 16945).

### Beispiel B8

### Stufe 1

In einem Vierhalskolben mit Rührer, Tropftrichter, Thermometer und Rückflußkühler werden 17,4 g 2,6-Toluylendüsocyanat bei 20°C vorgelegt und 107,8 g eines Butoxypoly(ethylenglycol-co-propylenglycol) mit einem Ethylenoxid/Propylenoxid-Verhältnis von 1:1 und mit einer Hydroxylzahl von 52 mg KOH/g innerhalb von 90 Minuten unter Rühren so zudosiert, dass die Temperatur 30°C nicht überschreitet. Nach 3 Stunden Nachreaktionszeit entsteht eine helle viskose Flüssigkeit mit einem NCO-Gehalt von 3,1%.

### Stufe 2

In einem Vierhalskolben mit Rührer, Tropftrichter, Thermometer und Rückflußkühler werden 90,5 g Dimethylsulfoxid und 75,42 g 3-Methoxy-N,N-dimethylpropionamid unter Rühren auf 120°C erwärmt. Bei Erreichen der Temperatur werden 2,15 g Lithiumchlorid zugesetzt und danach in 1 Stunde unter Rühren gelöst.

Anschließend wird die Temperatur auf 80°C gesenkt. Es werden 8,4 g Hexamethylendiamin zugegeben und die Mischung homogenisiert. Das vorab hergestellte Isocyanataddukt (Stufe 1) wird unter Rühren innerhalb 1 Stunde so langsam zugetropft, dass die Temperatur 85°C nicht überschreitet. Zur Vervollständigung der Reaktion wird das Reaktionsgemisch für 3 Stunden bei 80°C gerührt. Es wird ein klares, farbloses und leicht viskoses Produkt erhalten. Die Aminzahl liegt unter 2 mg KOH/g (bestimmt gemäß DIN 16945).

### Anwendungstechnische Prüfung der als Rheologiesteuerungsmittel geeigneten Kompositionen

### Prüfsystem 1:

**Eingesetzte Rohstoffe:**

| | |
|---|---|
| Setalux® 1603 BA-78 | Bindemittel auf Polyester-Polyol-Basis in Butylacetat, Nuplex Resins bv |
| Tinuvin® 1130 | UV-Absorber auf Basis Hydroxyphenylbenzotriazol, BASF Schweiz AG |
| Tinuvin® 292 | UV-Absorber auf Basis Bis-(1,2,2,6,6-pentamethyl-4-piperidinyl)-sebacat und 1-(Methyl)-8-(1,2,2,6,6-pentamethyl-4-piperidinyl)-sebacat, BASF Schweiz AG |
| TinStab® BL 277 | Dibutylzinndilaurat, Overlack AG |
| BYK®-310 | Lösung eines polyestermodifizierten Polydimethylsiloxan, BYK Chemie GmbH |
| BYK®-358 | Polyacrylat-Verlaufadditiv, BYK Chemie GmbH |
| BYK®-332 | Polyethermodifiziertes Polydimethylsiloxan, BYK Chemie GmbH |
| Dowanol PMA | 1-Methoxy-2-propylacetat, Dow Chemical Company |
| Tolonate HDT 90 | Aliphatisches Polyisocyanat auf Basis von Hexamethylendiisocyanat-Trimer (90 %-ige Anlösung in einer Mischung aus Butylacetat und aromatischen Kohlenwasserstoffen), Perstorp AB |

Zur Beurteilung der rheologischen Wirkung wird ein Beschichtungsmittel auf Basis eines 2-Komponenten-Polyurethan-Lacks hergestellt:

**Komponente A:**

| | |
|---|---|
| Setalux® 1603 BA-78 | 150,0 g |
| Butylacetat | 16,0 g |
| Tinuvin® 1130 | 3,0 g |
| Tinuvin® 292 | 0,9 g |
| TinStab® BL 277 | 5,4 g |
| BYK®-310 | 0,3 g |
| BYK®-358 | 1,5 g |
| BYK®-332 | 0,3 g |
| Dowanol PMA | 22,6 g |
| Gesamt | 200,0 g |

**Komponente B:**

| | |
|---|---|
| Tolonate HDT 90 | 66,2 g |
| Dowanol PMA | 16,9 g |
| Butylacetat | 16,9 g |
| Gesamt | 100,0 g |

### Lackherstellung:

Die Komponenten A und B werden separat hergestellt. Hierzu werden die einzelnen Bestandteile unter Rühren bei Raumtemperatur, bei 2 m/s mit einem Dispermat CV mit einer 2 cm-Zahnscheibe nacheinander zugegeben und anschließend zur Homogenisierung noch weitere 10 Minuten gerührt.

Zur Lackherstellung werden die Komponenten A und B gemischt.

**Verarbeitung:**

| | |
|---|---|
| Viskositätseinstellung : | 20 s DIN4 Auslaufbecher bei 23°C |
| Verdünnung : | Butylacetat / Dowanol PMA 60:40 |
| Applikation : | Elektrostatische Spritzlackierung |
| Trocknung : | 10 min. bei 23°C, 60 min. 60°C |

### Test auf Ablaufgrenze:

Zur Überprüfung des Einflusses auf das Ablaufverhalten von Lacken werden die Rheologiesteuerungsmittel in die Prüfsysteme unter Rühren bei Raumtemperatur mit einem Dispermat CV bei 2 m/s mit einer 2 cm-Zahnscheibe 2 min. eingearbeitet. Einen Tag nach der Einarbeitung werden die Lacke mit dem DIN4 Becher auf eine Auslaufzeit von 30 s verdünnt (DIN EN ISO 2431). Im Anschluss erfolgt die Applikation der Lacke mit elektrostatischer bzw. pneumatischer Spritzapplikation auf senkrecht hängende geprimerte Lochbleche (Stahl 30 cm x 50 cm) im Keil, mit einer Trockenschichtdicke von 10-50 µm. Die anschließende Ablüftung der Lackbleche sowie die Trocknung bei forcierten Bedingungen im Umluftofen erfolgt ebenfalls auf den senkrechten Blechen. Die Überprüfung des Ablaufverhaltens wird nach vollständiger Trocknung der Lacke durch visuelle Auswertung durchgeführt. Je höher die Ablaufgrenze ist, desto besser ist die rheologische Wirksamkeit des Rheologiesteuerungsmittels, d.h. desto höher ist die Schichtdicke des Lackes, die an senkrechten Flächen appliziert werden kann. Die Bestimmung der Trockenschichtdicke erfolgt mit dem Byko Test 1500 der Fa. BYK-Gardner nach DIN EN ISO 2178. Die Ergebnisse sind in Tabelle A1 zusammengefasst.

**Tabelle A1: Anwendungstechnische Ergebnisse**

| Additiv (1 Gew.% Harnstoffverbindung bezogen auf gesamt) | Ablaufgrenze / µm trocken |
|---|---|
| Nullprobe (ohne Additiv) | 25 |
| Vergleichsbeispiel A-V1 | 45 |
| Vergleichsbeispiel A-V2 | 47 |
| Vergleichsbeispiel A-V3 | 49 |
| Beispiel A1 | 56 |
| Beispiel A2 | 54 |
| Beispiel A3 | 60 |

Wie anhand der in Tabelle A1 gezeigten Ergebnisse ersichtlich, ist die rheologische Wirksamkeit der eingesetzten Additivkompositionen unterschiedlich. Auch wenn die dem Stand der Technik entsprechenden Kompositionen (Vergleichsbeispiel A-V1 und A-V2) gegenüber der Nullprobe eine Verbesserung zeigen, so wird die Ablaufgrenze - und somit die Leistungsfähigkeit der Additivkomposition als Rheologiesteuerungsmittel - mit den erfindungsgemäßen Kompositionen enthaltend Sauerstoffverbindungen (Beispiele A1 bis A3) noch weiter gesteigert.

### Prüfsystem 2

Zur Beurteilung der rheologischen Wirkung wird ein Beschichtungsmittel auf Basis eines Hydroxyacrylatlackes hergestellt.

| | |
|---|---|
| Desmophen® A 870 BA | 80,0 g |
| Butylacetat | 9,9 g |
| Dowanol® PMA | 9,9 g |
| BYK®-066 | 0,2 g |
| gesamt | 100,0g |

**Verwendete Rohstoffe:**

| | |
|---|---|
| Desmophen®A 870 BA | Hydroxyfunktionelles Polyacrylat 70%ig in Butylacetat |
| | Bayer AG |
| | |
| Dowanol® PMA | Methoxypropylacetat |
| | Dow |
| | |
| Butylacetat | Overlack AG |
| BYK®-066 | Silikonhaltiger Entschäumer für lösemittelhaltige Industrie-, Maler- und Bautenlacke |
| | sowie Klebstoffe |
| | BYK-Chemie GmbH |

### Lackherstellung

Desmophen A 870 BA wird unter Rühren mit einem Dispermaten CV bei einer Rührgeschwindigkeit von 2 m/s bei Raumtemperatur mit den beiden Lösungsmitteln Butylacetat und Methoxypropylacetat sowie mit BYK-066 versetzt und weitere 15 Minuten gerührt.

### Test auf Ablaufgrenze

Zur Überprüfung des Einflusses der hergestellten Substanzen auf das Ablaufverhalten des Lackes werden die Rheologiesteuerungsmittel in einer 0,35 Gew.% Harnstoffverbindung entsprechenden Menge unter Rühren mit einem Dispermat CV bei 800-1000 U/min mit einer Zahnscheibe mit 2,5 cm Durchmesser tropfenweise eingearbeitet und 2 Minuten lang homogenisiert. Anschließend wird der hergestellte Lack 16 Stunden bei Raumtemperatur gelagert.

Danach wird er mit Hilfe eines gestuften Filmziehlineals der Firma Erichsen und einer automatischen Aufziehbank mit einer Geschwindigkeit von 5 cm/s in Schichten zwischen 50 und 500 µm Dicke nebeneinander auf einen Kontrastkarte PA2801 der Firma BYK-Gardner ein Lackfilm aufgezogen. Dieser Lackaufzug wird rechtwinklig zur Aufzugsrichtung senkrecht aufgehängt und nach Trocknung des Lackes beurteilt. Die Beurteilung der Ergebnisse erfolgt in Angabe der Schichtdicke, in der kein Ablaufen, wie Läufer- oder Wulstbildung stattgefunden hat.

Somit ist die höchstmögliche Schichtdicke, die störungsfrei mit dieser Methode zu erzielen ist, ist ein Maß für die Ablaufeigenschaften des Lackes und somit die rheologiesteuernde Leistungsfähigkeit des eingesetzten Additivs.

In den Ergebnissen werden die erreichten Schichtdicken in µm angegeben.

**Tabelle B1: Anwendungstechnische Ergebnisse**

| | Schichtdicke | Aussehen |
|---|---|---|
| Vergleichsbeispiel B-V1 | 350 µm | Stippen |
| Beispiel B1 | 450 µm | sehr feine Stippen |

Anhand dieser Ergebnisse ist erkennbar, dass die erfindungsgemäße Komposition zum einen den Aufbau einer höheren Schichtdicke ermöglicht, zum anderen der so hergestellte Lackfilm weniger zur Stippenbildung neigt und und somit ein besseres optisches Erscheinungsbild aufweist als die nach dem Stand der Technik bekannte Komposition.

**Tabelle B2: Anwendungstechnische Ergebnisse**

| | | |
|---|---|---|
| Vergleichsbeispiel B-V2 | 100 µm | Stippen |
| Beispiel B2 | 300 µm | stippenfrei |

Anhand dieser Ergebnisse ist erkennbar, dass die erfindungsgemäße Komposition nicht nur den Aufbau einer höheren Schichtdicke ermöglicht, sondern der so hergestellte Lackfilm zusätzlich frei von Stippen ist und somit ein besseres optisches Erscheinungsbild aufweist als die nach dem Stand der Technik bekannte Komposition.

**Tabelle B3: Anwendungstechnische Ergebnisse**

| | | |
|---|---|---|
| Vergleichsbeispiel B-V3 | 150 µm | Stippen |
| Beispiel B3 | 350 µm | sehr feine Stippen |

Anhand dieser Ergebnisse ist erkennbar, dass die erfindungsgemäße Komposition zum einen den Aufbau einer höheren Schichtdicke ermöglicht, zum anderen der so hergestellte Lackfilm weniger zur Stippenbildung neigt und und somit ein besseres optisches Erscheinungsbild aufweist als die nach dem Stand der Technik bekannte Komposition.

### Prüfsystem 3

Zur Beurteilung der rheologischen Wirkung wird ein Beschichtungsmittel auf Basis eines wässrigen Polyacrylates hergestellt.

| | |
|---|---|
| Joncryl® SCX 8289 | 95,0 g |
| Butylglycol | 5,0 g |
| gesamt | 100,0g |

**Verwendete Rohstoffe:**

| | |
|---|---|
| Joncryl® SCX 8289 | 46%ige wässrige Polyacrylatdispersion Jonson Polymers |
| Butylglycol | Butylglycol als Filmbildehilfsmittel Overlack |

### Lackherstellung

Joncryl® SCX 8289 wird unter Rühren mit einem Dispermaten CV bei einer Rührgeschwindigkeit von 2 m/s bei Raumtemperatur mit Butylglycol verdünnt und weitere 15 Minuten gerührt.

### Test auf Ablaufgrenze

Zur Überprüfung des Einflusses der hergestellten Substanzen auf das Ablaufverhalten des Lackes werden die Rheologiesteuerungsmittel in einer 0,4 Gew.% Harnstoffverbindung entsprechenden Menge unter Rühren mit einem Dispermat CV bei 800-1000 U/min mit einer Zahnscheibe mit 2,5 cm Durchmesser tropfenweise eingearbeitet und 2 Minuten lang homogenisiert.

Anschließend wird der hergestellte Lack 16 Stunden bei Raumtemperatur gelagert. Danach wird dieser mit Hilfe eines gestuften Filmziehlineals der Firma Erichsen und einer automatischen Aufziehbank mit einer Geschwindigkeit von 5 cm/s in Schichten zwischen 30 und 300 µm Dicke nebeneinander auf einen Kontrastkarte PA2801 der Firma BYK-Gardner aufgezogen. Dieser Lackaufzug wird rechtwinklig zur Aufzugsrichtung senkrecht aufgehängt und nach Trocknung des Lackes beurteilt. Die Beurteilung der Ergebnisse erfolgt in Angabe der Schichtdicke, in der kein Ablaufen, wie Läufer- oder Wulstbildung stattgefunden hat.

Somit ist die höchstmögliche Schichtdicke, die störungsfrei mit dieser Methode zu erzielen ist, ist ein Maß für die Ablaufeigenschaften des Lackes und somit die rheologiesteuernde Leistungsfähigkeit des eingesetzten Additivs.

In den Ergebnissen werden die erreichten Schichtdicken in µm angegeben.

**Tabelle B4: Anwendungstechnische Ergebnisse**

| | Schichtdicke | Aussehen |
|---|---|---|
| Vergleichsbeispiel B-V4 | 180 µm | stippenfrei |
| Beispiel B4 | 210 µm | stippenfrei |
| Beispiel B5 | 350 µm | stippenfrei |

Anhand dieser Ergebnisse ist erkennbar, dass die erfindungsgemäße Kompositionen den Aufbau einer höheren Schichtdicke ermöglichen, als die nach dem Stand der Technik bekannte Kompositionen ermöglichen.

### Prüfsystem 4

Zur Beurteilung der rheologischen Wirkung wird ein Beschichtungsmittel auf Basis eines Urethanlackes hergestellt.

| | |
|---|---|
| Worleekyd® S366 | 80,9 g |
| Isopar® H | 16,0 g |
| Nuodex Kombi APB | 2,6 g |
| Borchi NOX M2 | 0,3 g |
| BYK®-066 | 0,2 g |
| gesamt | 100,0g |

**Verwendete Rohstoffe:**

| | |
|---|---|
| Worléekyd® S366 | langöliges, lufttrochnendes Alkydharz auf Basis Sojaöl 60%ig in Isopar H |
| | Worlée |
| Isopar® H | Isoparaffin mit Siedebereich 178-220°C |
| | Exxon |
| Nuodex Kombi APB | Kombinationstrocker auf Basis Kobalt, Calcium, Zink Condea Servo |
| Borchi NOX M2 | Methylethylketoxim (Hautverhinderungsmittel) OMG Borchers GmbH |
| BYK®-066 | Silikonhaltiger Entschäumer für lösemittelhaltige Industrie-, Maler- und Bautenlacke sowie Klebstoffe BYK-Chemie GmbH |

### Test auf Ablaufgrenze

Zur Überprüfung des Einflusses der hergestellten Substanzen auf das Ablaufverhalten des Lackes werden die Rheologiesteuerungsmittel in einer 0,5 Gew.% Harnstoffverbindung entsprechenden Menge unter Rühren mit einem Dispermat CV bei 800-1000 U/min mit einer Zahnscheibe mit 2,5 cm Durchmesser tropfenweise eingearbeitet und 2 Minuten lang homogenisiert.

Anschließend wird der hergestellte Lack 16 Stunden bei Raumtemperatur gelagert. Danach wird dieser mit Hilfe eines gestuften Filmziehlineals der Firma Erichsen und einer automatischen Aufziehbank mit einer Geschwindigkeit von 5 cm/s in Schichten zwischen 30 und 300 µm Dicke nebeneinander auf einen Kontrastkarte PA2801 der Firma BYK-Gardner aufgezogen. Dieser Lackaufzug wird rechtwinklig zur Aufzugsrichtung senkrecht aufgehängt und nach Trocknung des Lackes beurteilt. Die Beurteilung der Ergebnisse erfolgt in Angabe der Schichtdicke, in der kein Ablaufen, wie Läufer- oder Wulstbildung stattgefunden hat. Somit ist die höchst mögliche Schichtdicke, die störungsfrei mit dieser Methode zu erzielen ist, ist ein Maß für die Ablaufeigenschaften des Lackes und somit die rheologiesteuernde Leistungsfähigkeit des eingesetzten Additivs.

In den Ergebnissen werden die erreichten Schichtdicken in µm angegeben.

**Tabelle B5: Anwendungstechnische Ergebnisse**

| | Schichtdicke | Aussehen |
|---|---|---|
| Vergleichsbeispiel 5 | 210 µm | leicht trübe |
| Beispiel 6 | 270 µm | klar |

Anhand dieser Ergebnisse ist erkennbar, dass die erfindungsgemäße Komposition zum einen den Aufbau einer höheren Schichtdicke ermöglicht, zum anderen der so hergestellte Lackfilm keine Trübung aufweist und und somit ein besseres optisches Erscheinungsbild zeigt als die nach dem Stand der Technik bekannte Komposition.

### Prüfsystem 5

Zur Beurteilung der rheologischen Wirkung wird ein Beschichtungsmittel auf Basis eines ungesättigten Polyesters hergestellt.

| | |
|---|---|
| Palatal® P4 | 67,3 g |
| Styrol (Portion 1) | 16,7 g |
| BYK®-A 555 | 0,1 g |
| Aerosil 200 | 0,8 g |
| Styrol (Portion 2) | 15,2 g |
| gesamt | 100,1 g |

**Verwendete Rohstoffe:**

| | |
|---|---|
| Palatal® P4 | ungesättigtes Polyesterharz 63%ig gelöst in Styrol BASF |
| Styrol | Styrol |
| | Overlack |
| BYK®-A 555 | Silikonfreier Entlüfter auf Basis von Polymeren BYK-Chemie GmbH |
| Aerosil® 200 | Hydrophile pyrogene Kieselsäure Evonik |

### Herstellung des Beschichtungsmittels

Das Palatal P4 wird unter Rühren mit einem Dispermaten CV bei einer Rührgeschwindigkeit von 1865 U/min bei Raumtemperatur mit der ersten Styrolmenge verdünnt, mit BYK-A 555 versetzt und weitere 2 Minuten gerührt. Im Anschluß danach erfolgt die Zugabe des Aerosil 200 durch Einrühren mit einem Spatel.

Dann wird die Drehzahl auf 4660 U/min erhöht und für 5 Minuten gehalten. Unter leichtem Rühren wird danach die zweite Styrolmenge zugegeben und 2 Minuten homogenisiert.

### Prüfung auf den Einfluß auf das Absetzverhalten

Zur Überprüfung des Einflusses der hergestellten Substanzen auf das Absetzverhalten des Aerosils im Beschichtungsmittel werden die Rheologiesteuerungsmittel in einer Menge von 0,8 Gew.% des Additivs (d.h. des bei der Synthese erhaltenen Produkts) bezogen auf die komplette Formulierung unter Rühren mit einem Dispermat CV bei 800-1000 U/min mit einer Zahnscheibe mit 2,5 cm Durchmesser tropfenweise in das Beschichtungsmittel eingearbeitet und 2 Minuten lang homogenisiert.

Nach 16 Stunden wird die Stärke des Gelaufbaus nach Schulnoten beurteilt. Ein Teil der so hergestellten Dispersion wird in ein 100 ml fassendes, ca. 15 cm hohes Rollrand-Schnappdeckel-Probenglas eingefüllt. Das Absetzen des Aerosils wird täglich beurteilt. Angegeben wird die Anzahl Tage, an denen keine Separation zu beobachten ist

**Tabelle B6: Anwendungstechnische Ergebnisse**

| | Bewertung* | Stabilität gegen Separation |
|---|---|---|
| Vergleichsbeispiel B-V6 | 3 | 3 Tage |
| Beispiel B7 | 1 | 15 Tage |

| | | |
|---|---|---|
| *) *Bewertung nach Noten von 1 (starker Gelaufbau) bis 5 (kein Gelaufbau)* | | |

Anhand dieser Ergebnisse ist erkennbar, dass die erfindungsgemäße Komposition zum einen einen stärkeren Gelaufbau ermöglicht und hierdurch zum anderen eine signifikant bessere Stabilisierung gegen Separation (Absetzen des Aerosils) ermöglicht wird, als dies mit einer Komposition nach dem Stand der Technik möglich ist.

### Prüfsystem 6

Zur Beurteilung der rheologischen Wirkung wird ein Beschichtungsmittel auf Basis eines ungesättigten Polyesters hergestellt.

| | |
|---|---|
| Setal® 1715 VX 74 | 52,0 |
| Setamine® US 138 BB 70 | 24,0 |
| Shellsol A | 6,0 |
| Solvesso® 150 | 6,0 |
| Xylol | 6,0 |
| iso-Butanol | 6,0 |
| gesamt | 100,0 |

**Verwendete Rohstoffe:**

| | |
|---|---|
| Setal® 1715 VX 74 | Polyester Polyol 72%ig in Solventnaphtha® /Xylol |
| | Nuplex Resins |
| Setamine® US 138 BB 70 | Teilweise butyliertes Melamin, 71 %ig in Isobutanol Nuplex Resins |
| Shellsol A | Alkylbenzol |
| | Overlack |
| Solvesso 150 | Alkylbenzol |
| | Overlack |
| Iso-Butanol | Overlack |

### Lackherstellung

Setal 1715VX74 wird unter Rühren mit einem Dispermaten CV bei einer Rührgeschwindigkeit von 2 m/s bei Raumtemperatur mit Shellsol A und Sovesso 150 verdünnt und weitere 10 Minuten gerührt. Anschließend werden Isobutanol und Setamine US 138 BB 70 zugegeben und weitere 2 Minuten gerührt.

### Prüfung auf Transparenz und Stärke des Gelaufbaus

Zur Überprüfung des Einflusses der hergestellten Substanzen auf Transparenz und Stärke des Gelaufbau des Lackes werden die Rheologiesteuerungsmittel in einer 1,0 Gew.% Harnstoffverbindung entsprechenden Menge unter Rühren mit einem Dispermat CV bei 800-1000 U/min mit einer Zahnscheibe mit 2,5 cm Durchmesser tropfenweise eingearbeitet und 2 Minuten lang homogenisiert. Anschließend wird der hergestellte Lack 16 Stunden bei Raumtemperatur gelagert.

Das Aussehen der unausgehärteten Lackproben und die Stärke des gebildeten Gels werden visuell beurteilt.

**Tabelle B7: Anwendungstechnische Ergebnisse**

| | Aussehen | Gelstärke |
|---|---|---|
| Vergleichsbeispiel B-V7 | mittlere Trübung | weiches, schwaches Gel |
| Beispiel B8 | sehr schwache | standfestes Gel |
| | Trübung | |

Anhand dieser Ergebnisse ist erkennbar, dass die erfindungsgemäße Komposition zum einen einen deutlich stärkeren Gelaufbau ermöglicht und zum anderen eine deutlich bessere Verträglichkeit (d.h. schwächere Trübung und damit bessere Transparenz) im System ermöglicht, als dies die Komposition gemäß dem Stand der Technik ermöglicht.

## Patentansprüche

1. Komposition enthaltend
i) 15 - 95 Gew.-% einer Sauerstoffverbindung (A),
ii) 5 - 75 Gew.-% einer Harnstoffverbindung (B),
iii) 0 - 50 Gew.-% einer ionogene Verbindung (C) und
iv) 0 - 35 Gew.-% eines organischen Lösemittels (D),
wobei die Sauerstoffverbindung (A) eine molare Masse von 70 bis 600 g/mol sowie keine Harnstoffgruppe aufweist und vorliegt gemäß der allgemeinen Formel (I), 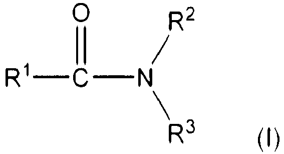 mit
R¹ jeweils gleich oder verschieden sowie repräsentiert durch Wasserstoff und/ oder einen verzweigten oder unverzweigten, gesättigten oder ungesättigten, 1 bis 16 Kohlenstoffatome, enthaltenden organischen Rest,
R² und R³ jeweils gleich oder verschieden sowie jeweils unabhängig voneinander repräsentiert durch einen verzweigten oder unverzweigten, gesättigten oder ungesättigten, 1 bis 12 Kohlenstoffatome aufweisenden organischen Rest und zwar mit der Maßgabe, dass R¹ und R² zusammen mit der R¹ und R² verbindenden Gruppierung CO-N gemeinsam einen Zyklus mit 4 bis 10 Ringatomen ausbilden können oder R² und R³ zusammen mit dem R² und R³ verbindenden N-Atom gemeinsam einen Zyklus mit 4 bis 7 Ringatomen ausbilden können, wobei die Gesamtheit der Reste R¹, R² und R³ aufweisen insgesamt 4 bis 40 Kohlenstoffatome, insgesamt 1 bis 8 Heteroatome aus der Gruppe bestehend aus O und N sowie insgesamt 1 bis 2 über Einfachbindungen verknüpfte Sauerstoffatome, die in Ether-, Ester-oder Hydroxyfunktionen vorliegen,
die Harnstoffverbindung (B) eine molare Masse von 350 bis 60000 g/mol sowie mindestens eine Harnstoffgruppe aufweist,
die ionogene Verbindung (C) eine kationische sowie eine anionische Komponente enthält und sich von der Sauerstoffverbindung (A) sowie von der Harnstoffverbindung (B) unterscheidet und
das organische Lösemittel (D) keine Harnstoffgruppe sowie keine ionische Gruppe enthält sowie maximal zwei Heteroatome ausgewählt aus der Gruppe bestehend aus Stickstoff und Sauerstoff, aufweist.

2. Komposition nach Anspruch 1 enthaltend
i) 30 - 80 Gew.-% der Sauerstoffverbindung (A),
ii) 20 - 55 Gew.-% der Harnstoffverbindung (B),
iii) 0 - 15 Gew.-% der ionogene Verbindung (C) und
iv) 2 - 25 Gew.-% des organischen Lösemittels (D).

3. Komposition nach Anspruch 1 oder 2, **dadurch gekennzeichnet, dass** die allgemeinen Formel (I) für 50 - 100 Gew.-% der Sauerstoffverbindung (A) derart vorliegt, dass R¹ gleich oder verschieden ist sowie durch Wasserstoff oder durch einen verzweigten oder unverzweigten, 1 bis 16 Kohlenstoffatome enthaltenden organischen Rest, bevorzugt durch einen verzweigten oder unverzweigten C1-C4-Alkylrest, repräsentiert wird und R² und R³ zusammen mit dem R² und R³ verbindenden N-Atom und einem Ethersauerstoffatom gemeinsam einen Zyklus mit 5 bis 7 Ringatomen ausbilden.

4. Komposition nach einem der Ansprüche 1 bis 3, **dadurch gekennzeichnet, dass** die allgemeinen Formel (I) für 50 - 100 Gew.-% der Sauerstoffverbindung (A) gemäß der allgemeinen Formel (la) vorliegt, 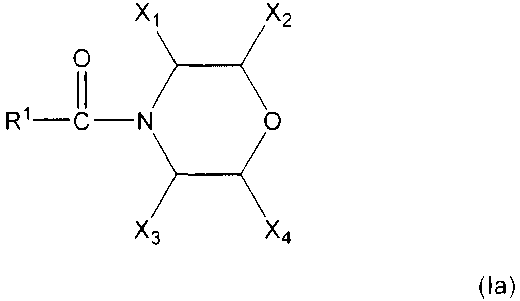 mit
R¹ gleich oder verschieden sowie repräsentiert durch Wasserstoff und/ oder eine Methylgruppe und
X₁, X₂, X₃ und X₄, jeweils gleich oder verschieden sowie jeweils unabhängig voneinander repräsentiert durch Wasserstoff und/ oder eine lineare oder verzweigte C1-C8-Alkylgruppe.

5. Komposition nach Anspruch 1 oder 2, **dadurch gekennzeichnet, dass** die allgemeinen Formel (I) für 50 - 100 Gew.-% der Sauerstoffverbindung (A) derart vorliegt, dass R¹ gleich oder verschieden ist und repräsentiert wird durch einen 1 oder 2 durch Einfachbindungen verknüpfte, in Ethergruppen und/ oder Estergruppen vorkommende Sauerstoffatome sowie 2 bis 16 Kohlenstoffatome aufweisenden linearen oder verzweigten organischen Rest und R² und R³ jeweils gleich oder verschieden sind sowie jeweils unabhängig voneinander repräsentiert werden durch einen verzweigten oder unverzweigten, gesättigten oder ungesättigten C1 - C8-Kohlenwasserstoffrest.

6. Komposition nach einem der Ansprüche 1, 2 oder 5, **dadurch gekennzeichnet, dass** die allgemeinen Formel (I) für 50 - 100 Gew.-% der Sauerstoffverbindung (A) derart vorliegt, dass R¹ gleich oder verschieden ist und repräsentiert wird gemäß einer oder mehrerer der allgemeinen Formelsegmente aus der Gruppe bestehend aus (Ib) sowie (Ic) 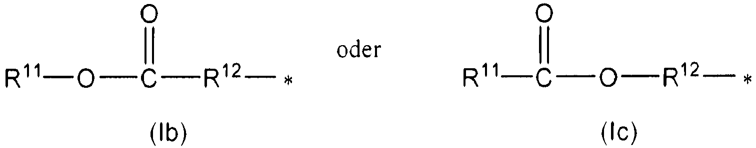 mit
R¹¹ jeweils gleich oder verschieden sowie repräsentiert durch einen linearen oder verzweigten C1-C8-Alkylrest, C5-C7-Cycloalkylrest oder Phenylrest sowie
R¹² jeweils gleich oder verschieden sowie repräsentiert durch einen linearen oder verzweigten C2-C8-Alkylenrest.

7. Komposition nach einem der Ansprüche 1, 2 oder 5, **dadurch gekennzeichnet, dass** die allgemeinen Formel (I) für 50 - 100 Gew.-% der Sauerstoffverbindung (A) derart vorliegt, dass R¹ gleich oder verschieden ist und repräsentiert wird gemäß dem allgemeinen Formelsegment (Id)
R²¹-O-R²²-* (Id)
mit
R²¹ jeweils gleich oder verschieden sowie repräsentiert durch einen linearen oder verzweigten C1-C4-Alkylrest sowie
R²² jeweils gleich oder verschieden sowie repräsentiert durch einen linearen oder verzweigten C2-C6-Alkylenrest.

8. Komposition nach einem der Ansprüche 1 bis 7, **dadurch gekennzeichnet, dass** 70 - 100 Gew.-% der Harnstoffverbindung (B) entweder mindestens zwei Harnstoffgruppen oder mindestens eine Harnstoffgruppe und mindestens eine Urethangruppen aufweist.

9. Komposition nach einem der Ansprüche 1 bis 8, **dadurch gekennzeichnet, dass** 50 - 100 Gew.-% der Harnstoffverbindung (B) gemäß der allgemeinen Formel (II) vorliegt
R³¹-[R³³-Z-R³⁴-W-]ₙR³² (II)
mit
R³¹ und R³² jeweils gleich oder verschieden sowie jeweils unabhängig voneinander repräsentiert durch einen verzweigten oder unverzweigten, gesättigten oder ungesättigten 1 - 100 Kohlenstoffatome enthaltenden organischen Rest, der maximal jeweils eine Harnstoffgruppe und maximal jeweils eine Urethangruppe aufweist,
R³³ und R³⁴ jeweils gleich oder verschieden sowie jeweils unabhängig voneinander repräsentiert durch 1 - 300 Kohlenstoffatome enthaltende, optional Ethergruppen enthaltende verzweigte oder unverzweigte Polyesterreste, 2 - 300 Kohlenstoffatome enthaltende verzweigte oder unverzweigte Polyetherreste, 1 - 300 Kohlenstoffatome enthaltende verzweigte oder unverzweigte Polyamidreste, 3 bis 100 Siliziumatome enthaltende Polysiloxanreste, verzweigte oder unverzweigte C2-C22-Alkylenreste, verzweigte oder unverzweigte C3-C18-Alkenylenreste, C5-C12-Arylenreste und/ oder verzweigte oder unverzweigte C7-C22 Arylalkylenreste,
Z und W jeweils gleich oder verschieden sowie jeweils unabhängig voneinander repräsentiert durch NH-CO-O und/ oder NH-CO-NH,
n jeweils gleich oder verschieden sowie repräsentiert durch eine ganze Zahl von 1 bis 150, bevorzugt von 2 bis 120.

10. Komposition nach einem der Ansprüche 1 bis 9, **dadurch gekennzeichnet, dass** 50 - 100 Gew.-% der Harnstoffverbindung (B) jeweils ein Molekulargewicht von 2000 bis 55000 sowie 4 - 150 Harnstoffgruppen aufweist.

11. Komposition nach einem der Ansprüche 1 bis 10, **dadurch gekennzeichnet, dass** 50 - 100 Gew.-% der Harnstoffverbindung (B) jeweils vorliegen gemäß einer der allgemeinen Formeln ausgewählt aus der Gruppe bestehend aus (IIIa), (IIIb), (IIIc) und (IIId) 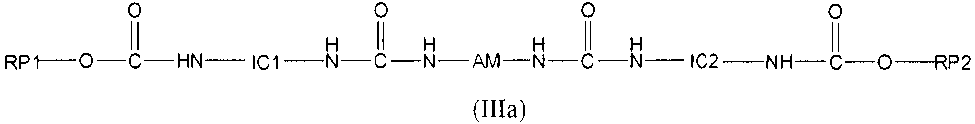 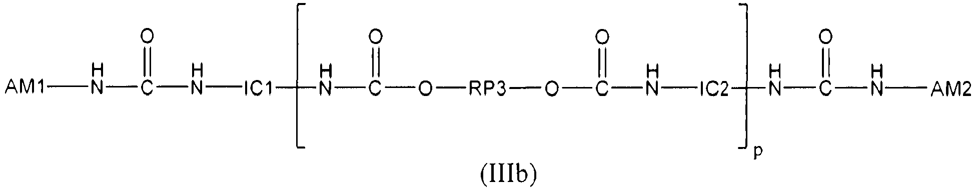 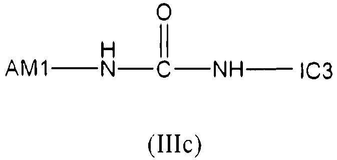 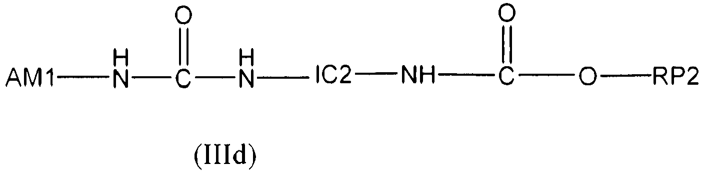 mit
AM gleich oder verschieden sowie repräsentiert durch einen linearen oder verzweigten, gesättigten oder ungesättigten, aliphatischen, aromatischen oder aliphatisch-aromatischen organischen Rest mit 2 bis 50 C-Atomen,
AM1 sowie AM2 jeweils gleich oder verschieden sowie jeweils unabhängig voneinader repräsentiert durch einen linearen oder verzweigten, gesättigten oder ungesättigten, aliphatischen, aromatischen oder aliphatisch-aromatischen organischen Rest mit 1 bis 50 C-Atomen,
IC1 sowie IC2 jeweils gleich oder verschieden sowie jeweils unabhängig voneinader repräsentiert durch einen linearen oder verzweigten, gesättigten oder ungesättigten, aliphatischen, aromatischen oder aliphatisch-aromatischen Kohlenwasserstoffrest mit 2 bis 40 C-Atomen,
IC3 gleich oder verschieden sowie repräsentiert durch einen linearen oder verzweigten, gesättigten oder ungesättigten, aliphatischen, aromatischen oder aliphatisch-aromatischen Kohlenwasserstoffrest mit 2 bis 24 Kohlenstoffatomen,
RP1 sowie RP2 jeweils gleich oder verschieden sowie jeweils unabhängig voneinader repräsentiert durch einen linearen oder verzweigten, gesättigten oder ungesättigten, aliphatischen, aromatischen oder aliphatisch-aromatischen organischen Rest mit 1 bis 24 C-Atomen und/ oder durch einen Polyetherrest mit 1 bis 120 Ethersauerstoffatomen und/ oder durch einen optional Ethergruppen enthaltenden Polyesterrest mit 1 bis 100 Estergruppen und/ oder durch einen Polyamidrest mit 1 bis 100 Amidgruppen und/ oder durch einen Polysiloxanrest mit 3 bis 100 Siliziumatomen,
RP3 gleich oder verschieden sowie repräsentiert durch einen linearen oder verzweigten, gesättigten oder ungesättigten, aliphatischen, aromatischen oder aliphatisch-aromatischen Kohlenwasserstoffrest mit 2 bis 24 C-Atomen und/ oder durch einen (Poly)etherrest mit 1 bis 120 Ethersauerstoffatomen und/ oder durch einen Polyamidrest mit 1 bis 100 Amidgruppen und/ oder durch einen Polysiloxanrest mit 3 bis 100 Siliziumatomen und/oder durch einen optional Ethergruppen enthaltender Polyesterrest mit 1 bis 100 Estergruppen und
p gleich oder verschieden sowie repräsentiert durch 0 und/ oder 1.

12. Komposition nach Anspruch 11, **dadurch gekennzeichnet, dass** 70 - 100 Gew.-% der Harnstoffverbindung (B) jeweils vorliegen gemäß einer der allgemeinen Formeln ausgewählt aus der Gruppe bestehend aus (IIIa), (IIIb), (IIIb) und (IIId), wobei
AM gleich oder verschieden sowie ausgewählt ist aus der Gruppe bestehend aus 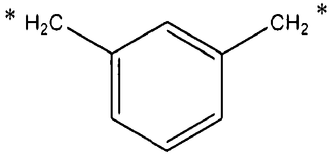 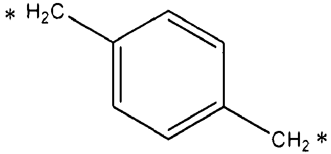 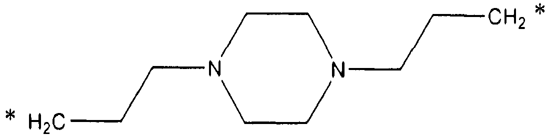 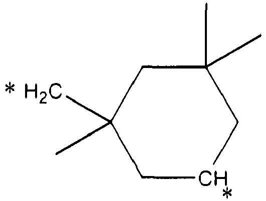 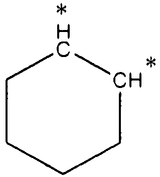 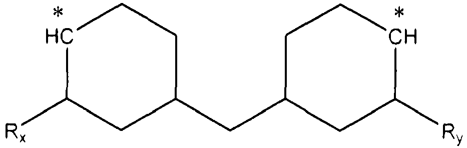 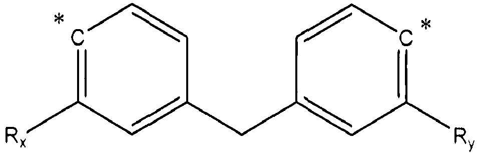
mit Rₓ und R_{y} gleich oder verschieden sowie jeweils unabhängig repräsentiert durch CH₃ und/ oder Wasserstoff, (CH₂)_{q}
mit q gleich oder verschieden sowie repräsentiert durch eine ganze Zahl von 2 bis 12 ,
AM1 und AM2 jeweils gleich oder verschieden sowie ausgewählt sind aus der Gruppe bestehend aus n-Propyl, Isopropyl, Butyl, Isobutyl, tert-Butyl, Lauryl, Oleyl, Stearyl, Polyisobutylen und Polyether mit 2 bis 40 Ethersauerstoffatomen, Benzyl, Methylbenzyl, Cyclohexyl, Carboxyalkyl, Hydroxyalkyl und Alkylalkoxysilan.
IC1 und IC2 jeweils gleich oder verschieden sowie ausgewählt sind aus der Gruppe bestehend aus 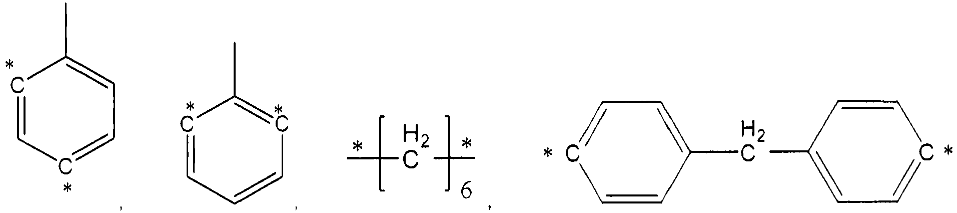 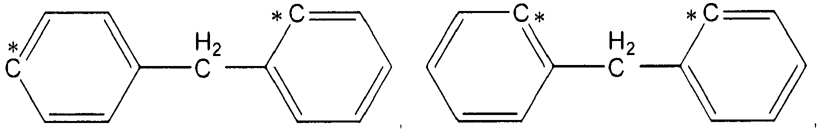 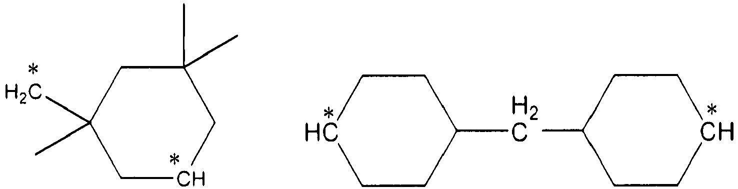 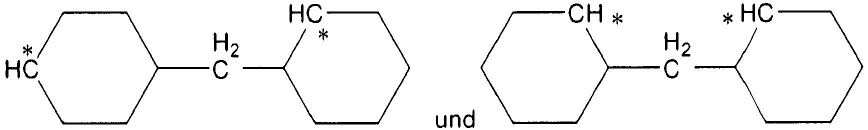
IC3 gleich oder verschieden sowie ausgewählt ist aus der Gruppe bestehend aus Methyl, Ethyl, Phenyl, Benzyl, Cyclohexyl und Stearyl,
RP1 und RP2 jeweils gleich oder verschieden sowie ausgewählt sind aus der Gruppe bestehend aus verzweigtem oder unverzweigtem C1-bis C18-Alkyl, Oleyl, Benzyl, Allyl, bevorzugt Struktureinheiten von Ethylenoxid, Propylenoxid und/ oder Butylenoxid enthaltender Polyetherrest und Struktureinheiten von Epsilon-Caprolacton und/ oder Delta-Valerolacton enthaltender Polyesterrest,
RP3 gleich oder verschieden sowie ausgewählt ist aus der Gruppe bestehend aus linearem oder verzweigtem C1- bis C18-Alkylen, linearem oder verzweigtem C2- bis C18-Alkenylen, bevorzugt Struktureinheiten von Ethylenoxid, Propylenoxid und/ oder Butylenoxid enthaltender Polyether mit 1 bis 25 Ethersauerstoffatomen.

13. Komposition nach einem der Ansprüche 1 bis 11, **dadurch gekennzeichnet, dass** 70 - 100 Gew.-% der Harnstoffverbindung (B) jeweils durch Umsetzung von durch Isocyanurat- und/oder Uretdionbildung oligomerisierten Isocyanaten mit monofunktionellen Aminen herstellbar sind.

14. Komposition nach einem der Ansprüche 1 bis 13, **dadurch gekennzeichnet, dass** 95 - 100 Gew,-%, bevorzugt 98 - 100 Gew.-% der Harnstoffverbindung (B) jeweils mindestens
ein Molekülsegment der allgemeinen Formel (IVa) enthält
-O-CO-NH-Y₁-NH-CO-NH- (IVa)
mit
Y₁ gleich oder verschieden sowie repräsentiert durch einen 6 bis 20 Kohlenstoffatome enthaltenden gesättigten oder ungesättigten, verzweigten oder unverzweigten Kohlenwasserstoffrest,
und jeweils kein Molekülsegment der allgemeinen Formel (IVb) enthält
-O-CO-NH-Y₂-NH-CO-O- (IVb)
mit
Y₂ gleich oder verschieden sowie repräsentiert durch einen 6 bis 20 Kohlenstoffatome enthaltenden gesättigten oder ungesättigten, verzweigten oder unverzweigten Kohlenwasserstoffrest.

15. Komposition nach einem der Ansprüche 1 bis 14 enthaltend 0,5 - 4,0 Gew.-% der ionogenen Verbindung (C), wobei 50 - 100 Gew.- % der ionogenen Verbindung (C) als Lithium- oder Calciumsalz, bevorzugt als deren Chlorid, Acetat und/ oder Nitrat, vorliegt.

16. Komposition nach einem der Ansprüche 1 bis 15, welche sich zur Rheologiesteuerung, insbesondere zur Thixotropierung, von flüssigen Systemen eignet.

17. Verwendung einer Komposition gemäß eines der Ansprüche 1 bis 16 zur Rheologiesteuerung, insbesondere zur Thixotropierung, einer flüssigen Mischung.

18. Verwendung nach Anspruch 17, **dadurch gekennzeichnet, dass** die flüssige Mischung vorliegt als Beschichtung, insbesondere als Lack, als Kunststoffformulierung, als Pigmentpaste, als Dichtstoffformulierung, als Kosmetika, als Keramikformulierung, als Klebstoffformulierung, als Vergussmasse, als Baustoffformulierung, als Schmierstoff, als Spachtelmasse, als Druckfarbe oder als Tinte.

19. Zubereitung, die als Lack, als Kunststoffformulierung, als Pigmentpaste, als Dichtstoffformulierung, als Kosmetika, als Keramikformulierung, als Klebstoffformulierung, als Vergussmasse, als Baustoffformulierung, als Schmierstoff, als Spachtelmasse, als Druckfarbe oder als Tinte vorliegt und welcher 0,1 bis 7,5 Gew.% einer Komposition gemäß einem der Ansprüche 1 bis 16 zugesetzt worden ist.

## Claims

1. Composition containing
i) 15 - 95% by weight of an oxygen compound (A),
ii) 5 - 75% by weight of a urea compound (B),
iii) 0 - 50% by weight of an ionogenic compound (C) and
iv) 0 - 35% by weight of an organic solvent (D),
wherein the oxygen compound (A) comprises a molar mass from 70 to 600 g/mol and no urea group and is present according to the general formula (I), 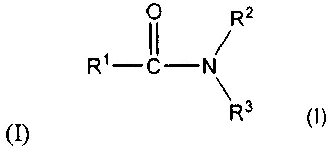 with
R¹ in each case the same or different and represented by hydrogen and/or a branched or unbranched, saturated or unsaturated organic residue containing 1 to 16 carbon atoms,
R² and R³ the same or different and in each case represented independently of one another by a branched or unbranched, saturated or unsaturated organic residue containing 1 to 12 carbon atoms and, in fact, with the condition that R¹ and R², together with the grouping CO-N connecting R¹ and R², can jointly form a cycle with 4 to 10 ring atoms or R² and R³, together with the N-atom connecting the R² and R³, can jointly form a cycle with 4 to 7 ring atoms, wherein the totality of the residues R¹, R² and R³ comprise a total of 4 to 40 carbon atoms, in total 1 to 8 heteroatoms from the group consisting of O and N, and in total 1 to 2 oxygen atoms linked via single bonds, which are present in ether, ester or hydroxy functions,
the urea compound (B) comprises a molar mass from 350 to 60000 g/mol and at least one urea group,
the ionogenic compound (C) contains a cationic and an anionic component and differs from the oxygen compound (A) and from the urea compound (B) and
the organic solvent (D) contains no urea group and no ionic group and comprises a maximum of two heteroatoms selected from the group consisting of nitrogen and oxygen.

2. Composition according to claim 1 containing
i) 30 - 80% by weight of the oxygen compound (A),
ii) 20 - 55% by weight of the urea compound (B),
iii) 0 - 15% by weight of the ionogenic compound (C) and
iv) 2 - 25% by weight of the organic solvent (D).

3. Composition according to claim 1 or 2, **characterised in that** the general formula (I) is present for 50 - 100% by weight of the oxygen compound (A) in such a manner that R¹ is the same or different and is represented by hydrogen or by a branched or unbranched organic residue containing 1 to 16 carbon atoms, preferably by a branched or unbranched C1-C4-alkyl residue, and R² and R³, together with the N-atom connecting the R² and R³ and one ether oxygen atom jointly form a cycle with 5 to 7 ring atoms.

4. Composition according to one of claims 1 to 3, **characterised in that** the general formula (I) is present for 50-100% by weight of the oxygen compound (A) according to the general formula (Ia), 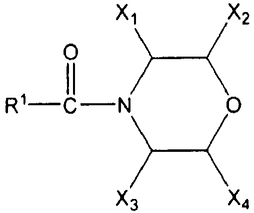 (Ia)
with
R¹ the same or different and represented by hydrogen and/or a methyl group and
X₁, X₂, X₃ and X₄ in each case the same or different and each represented independently of one another by hydrogen and/or a linear or branched C1-C8-alkyl group.

5. Composition according to claim 1 or 2, **characterised in that** the general formula (I) is present for 50-100% by weight of the oxygen compound (A) in such a manner that R¹ is the same or different and is represented by a linear or branched organic residue comprising 1 or 2 oxygen atoms occurring in ether groups and/or ester groups linked by single bonds and comprising 2 to 16 carbon atoms, and R² and R³ are each the same or different and are each represented independently of one another by a branched or unbranched, saturated or unsaturated C1-C8-hydrocarbon residue.

6. Composition according to one of claims 1, 2 or 5, **characterised in that** the general formula (I) is present for 50 - 100% by weight of the oxygen compound (A) in such a manner that R¹ is the same or different and is represented according to one or more of the general formula segments from the group consisting of (Ib) and (Ic) 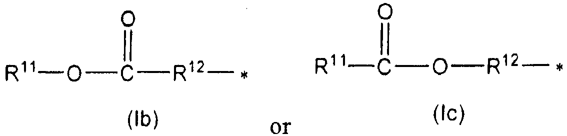 with
R¹¹ in each case the same or different and represented by a linear or branched C1-C8-alkyl residue, C5-C7-cycloalkyl residue or phenyl residue and
R¹² in each case the same or different and represented by a linear or branched C2-C8 alkylene residue.

7. Composition according to any one of claims 1, 2 or 5, **characterised in that** the general formula (I) is present for 50 - 100% by weight of the oxygen compound (A) in such a manner that R¹ is the same or different and is represented according to the general formula segment (Id) 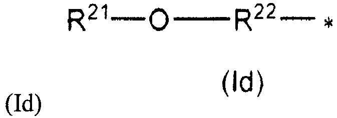 with
R²¹ in each case the same or different and represented by a linear or branched C1-C4-alkyl residue and
R²² in each case the same or different and represented by a linear or branched C2-C6-alkylene residue.

8. Composition according to one of claims 1 to 7, **characterised in that** 70 - 100% by weight of the urea compound (B) comprises either at least two urea groups or at least one urea group and at least one urethane groups.

9. Composition according to one of claims 1 to 8, **characterised in that** 50 - 100% by weight of the urea compound (B) is present according to the general formula (II)
R³¹-[R³³-Z-R³⁴-W-]ₙR³² (II)
with
R³¹ and R³² in each case the same or different and in each case represented independently of one another by a branched or unbranched, saturated or unsaturated organic residue containing 1-100 carbon atoms, which comprises, in each case, a maximum of one urea group and in each case a maximum of one urethane group,
R³³ and R³⁴ in each case the same or different and in each case represented independently of one another by branched or unbranched polyester residues containing 1 - 300 carbon atoms, optionally containing ether groups, branched or unbranched polyether residues containing 2 - 300 carbon atoms, branched or unbranched polyamide residues containing 1 - 300 carbon atoms, polysiloxane residues containing 3 to 100 silicon atoms, branched or unbranched C2-C22-alkylene residues, branched or unbranched C3-C18 alkylene residues, C5-C12 arylene residues and/or branched or unbranched C7-C22 arylalkylene residues,
Z and W in each case the same or different and in each case represented independently of one another by NH-CO-O and/or NH-CO-NH,
N in each case the same or different and represented by a whole number from 1 to 150, preferably from 2 to 120.

10. Composition according to one of claims 1 to 9, **characterised in that** 50 - 100% by weight of the urea compound (B) in each case comprises a molecular weight from 2000 to 55000 and 4 - 150 urea groups.

11. Composition according to one of claims 1 to 10, **characterised in that** 50 - 100% by weight of the urea compound (B) are present in each case according to one of the general formulae selected from the group consisting of (IIIa), (IIIb), (IIIc) and (IIId) 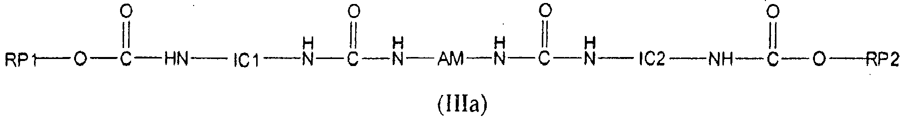 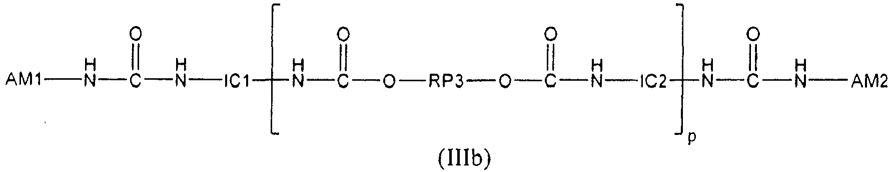 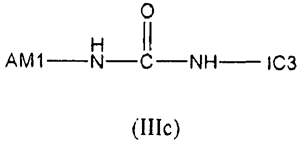 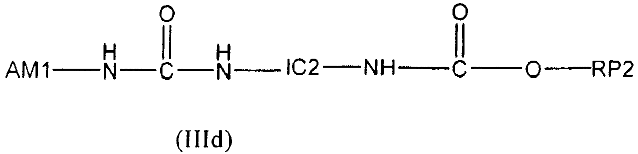 with
AM the same or different and represented by a linear or branched, saturated or unsaturated, aliphatic, aromatic or aliphatic-aromatic organic residue with 2 to 50 C-atoms,
AM1 and AM2 in each case the same or different and in each case represented independently of one another by a linear or branched, saturated or unsaturated, aliphatic, aromatic or aliphatic-aromatic organic residue with 1 to 50 C- atoms,
IC1 and IC2 in each case the same or different and in each case represented independently of one another by a linear or branched, saturated or unsaturated, aliphatic, aromatic or aliphatic-aromatic hydrocarbon residue with 2 to 40 C-atoms,
IC3 the same or different and represented by a linear or branched, saturated or unsaturated, aliphatic, aromatic or aliphatic-aromatic hydrocarbon residue with 2 to 24 carbon atoms,
RP1 and RP2 in each case the same or different and in each case represented independently of one another by a linear or branched, saturated or unsaturated, aliphatic, aromatic or aliphatic-aromatic organic residue with 1 to 24 C-atoms and/or by a polyether residue with 1 to 120 ether oxygen atoms and/or by a polyester residue with 1 to 100 ester groups, optionally containing ether groups, and/or by a polyamide residue with 1 to 100 amide groups and/or by a polysiloxane residue with 3 to 100 silicon atoms,
RP3 the same or different and represented by a linear or branched, saturated or unsaturated, aliphatic aromatic or aliphatic-aromatic hydrocarbon residue with 2 to 24 C-atoms and/or by a (poly)ether residue with 1 to 120 ether oxygen atoms and/or by a polyamide residue with 1 to 100 amide groups and/or by a polysiloxane residue with 3 to 100 silicon atoms and/or by a polyester residue with 1 to 100 ester groups, optionally containing ether groups, and
p the same or different and represented by 0 and/or 1.

12. Composition according to claim 11, **characterised in that** 70 - 100% by weight of the urea compound (B) are present in each case according to one of the general formulae selected from the group consisting of (IIIa), (IIIb), (IIIc) and (IIId), wherein
AM is the same or different and is selected from the group consisting of 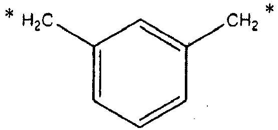 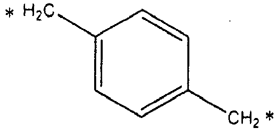 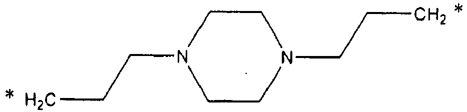 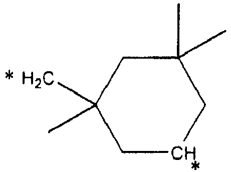 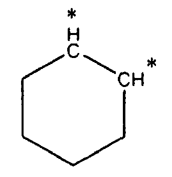 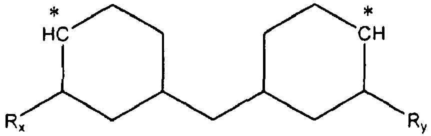 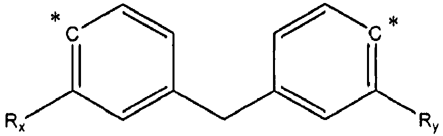 with Rₓ and R_{y} the same or different and in each case represented independently by CH₃ and/or hydrogen,
(CH₂)_{q}
with q the same or different and represented by a whole number from 2 to 12,
AM1 and AM2 in each case the same or different and selected from the group consisting of n-propyl, isopropyl, butyl, isobutyl, tert-butyl, lauryl, oleyl, stearyl, polyisobutylene and polyether with 2 to 40 ether oxygen atoms, benzyl, methylbenzyl, cyclohexyl, carboxyalkyl, hydroxyalkyl and alkylalkoxy silane.
IC1 and IC2 in each case the same or different and selected from the group consisting of 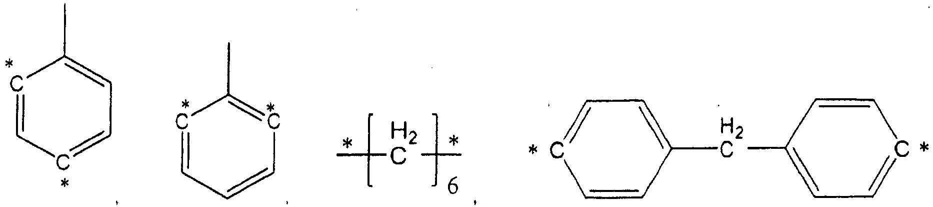 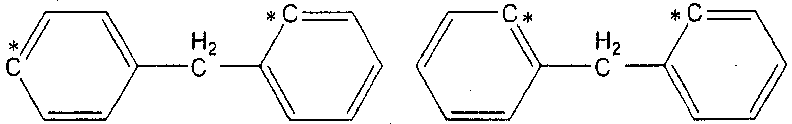 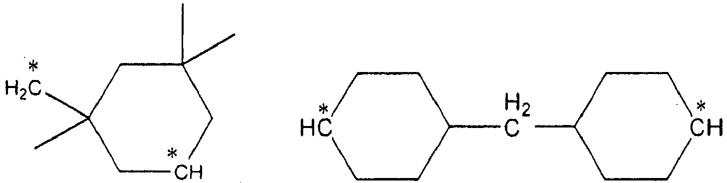 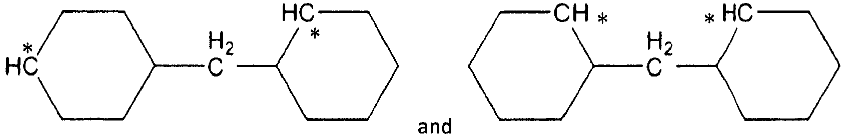 IC3 the same or different and selected from the group consisting of methyl, ethyl, phenyl, benzyl, cyclohexyl and stearyl,
RP1 and RP2 in each case the same or different and selected from the group consisting of branched or unbranched C1- to C18 alkyl, oleyl, benzyl, allyl, polyether residue preferably containing structural units of ethylene oxide, propylene oxide and/or butylene oxide and polyester residue containing structural units of epsilon-caprolactone and/or delta valerolactone,
RP3 the same or different and selected from the group consisting of linear or branched C1- to C18 alkylene, linear or branched C2- to C18 alkenylene, polyether with 1 to 25 ether oxygen atoms preferably containing structural units of ethylene oxide, propylene oxide and/or butylene oxide.

13. Composition according to one of claims 1 to 11, **characterised in that** 70 - 100% by weight of the urea compound (B) can be manufactured in each case by conversion of isocyanates oligomerised through the formation of isocyanurate and/or uretdione with monofunctional amines.

14. Composition according to one of claims 1 to 13, **characterised in that** 95 - 100% by weight, preferably 98 - 100% by weight of the urea compound (B) contains at least
one molecule segment of the general formula (IVa)
-O-CO-NH-Y₁-NH-CO-NH- (IVa)
with
Y₁ the same or different and represented by a saturated or unsaturated, branched or unbranched hydrocarbon residue containing 6 to 20 carbon atoms,
and contains in each case no molecule segment of the general formula (IVb)
-O-CO-NH-Y₂-NH-CO-O- (IVb)
with
Y₂ the same or different and represented by a saturated or unsaturated, branched or unbranched hydrocarbon residue containing 6 to 20 carbon atoms.

15. Composition according to one of claims 1 to 14 containing 0.5 - 4.0% by weight of the ionogenic compound (C), wherein 50 - 100% by weight of the ionogenic compound (C) is present as lithium or calcium salt, preferably as its chloride, acetate and/or nitrate.

16. Composition according to one of claims 1 to 15, which is suitable for rheological control, especially thixotropifying, of liquid systems.

17. Use of a composition according to one of claims 1 to 16 for rheological control, especially thixotropifying, of a liquid mixture.

18. Use according to claim 17, **characterised in that** the liquid mixture is present as a coating, especially as a paint, a synthetic-material formulation, a pigment paste, a sealant formulation, a cosmetic, a ceramic formulation, an adhesive formulation, a casting compound, a building-material formulation, a lubricant, a filling compound, a printing colourant or an ink.

19. Preparation, which is present as a paint, a synthetic-material formulation, a pigment paste, a sealant formulation, a cosmetic, a ceramic formulation, an adhesive formulation, a casting compound, a building-material formulation, a lubricant, a filling compound, a printing colourant or an ink and to which a 0.1 to 7.5% by weight of a composition according to one of claims 1 to 16 has been added.

## Revendications

1. Composition contenant
i) 15 à 95 % en poids d'un composé oxygéné (A),
ii) 5 à 75 % en poids d'un composé de l'urée (B),
iii) 0 à 50 % en poids d'un composé ionogène (C), et
iv) 0 à 35 % en poids d'un solvant organique (D),
dans laquelle le composé oxygéné (A) présente une masse moléculaire de 70 à 600 g/mol et ne contient aucun groupe urée, et est présent selon la formule générale (I), 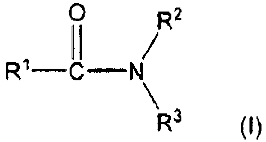 dans laquelle
chaque R¹ est identique ou différent, et représente un atome d'hydrogène et/ou un radical organique ramifié ou non ramifié, saturé ou insaturé, contenant 1 à 16 atomes de carbone,
R² et R³ sont chacun identiques ou différents, et représentent chacun indépendamment de l'autre un radical organique ramifié ou non ramifié, saturé ou insaturé, ayant 1 à 12 atomes de carbone, et plus précisément à la condition que R¹ et R², avec le groupement CO-N reliant R¹ et R², puissent former ensemble un cycle ayant 4 à 10 chaînons de cycle, ou R² et R³, avec l'atome d'azote qui relie R² et R³, puissent former ensemble un cycle ayant 4 à 7 chaînons de cycle, l'ensemble des radicaux R¹, R² et R³ comprenant en tout 4 à 40 atomes de carbone, en tout 1 à 8 hétéroatomes du groupe composé de O et N, ainsi qu'en tout 1 à 2 atomes d'oxygène reliés par des liaisons simples, qui sont présents dans des fonctions éther, ester ou hydroxy,
le composé de l'urée (B) présente une masse moléculaire de 350 à 60 000 g/mol, ainsi qu'au moins un groupe urée,
le composé ionogène (C) contient un composant cationique, ainsi qu'un composant anionique, et est différent tant du composé oxygéné (A) que du composé de l'urée (B), et
le solvant organique ne contient aucun groupe urée, et de même ne contient aucun groupe ionique, et de même comprend au maximum deux hétéroatomes choisis dans le groupe composé de l'azote et de l'oxygène.

2. Composition selon la revendication 1, contenant
i) 30 à 80 % en poids du composé oxygéné (A),
ii) 20 à 55 % en poids du composé de l'urée (B),
iii) 0 à 15 % en poids du composé ionogène (C), et
iv) 2 à 25 % en poids du solvant organique (D).

3. Composition selon la revendication 1 ou 2, **caractérisée en ce que** la formule générale (1), pour 50 à 100 % en poids du composé oxygéné (A), se présente de façon telle que R¹ est identique ou différent, et est représenté par un atome d'hydrogène ou par un radical organique ramifié ou non ramifié contenant 1 à 16 atomes de carbone, de préférence par un radical alkyle en C₁ à C₄ ramifié ou non ramifié, et R² et R³, avec l'atome d'azote qui relie R² et R³ et un atome d'éther-oxygène, forment ensemble un cycle ayant 5 à 7 chaînons de cycle.

4. Composition selon l'une des revendications 1 à 3, **caractérisée en ce que** la formule générale (I), pour 50 à 100 % en poids du composé oxygéné (A), se présente selon la formule générale (Ia) 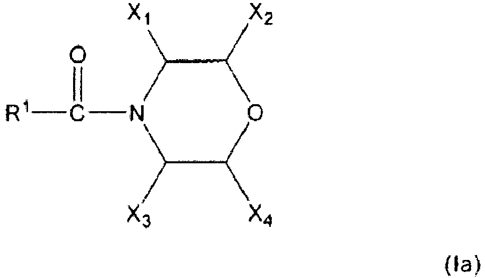 dans laquelle
R¹ est identique ou différent, et est représenté par un atome d'hydrogène et/ou par un groupe méthyle, et
X₁, X₂, X₃ et X₄ sont chacun identiques ou différents, et sont chacun représentés, indépendamment les uns des autres, par un atome d'hydrogène et/ou par un groupe alkyle en C₁-C₈ à chaîne linéaire ou ramifiée.

5. Composition selon la revendication 1 ou 2, **caractérisée en ce que** la formule générale (I) s'applique pour 50 à 100 % en poids du composé oxygéné (A) de façon telle que R¹ est identique ou différent et est représenté par un radical organique à chaîne linéaire ou ramifiée, comprenant 1 ou 2 atomes d'oxygène, reliés par des liaisons simples, apparaissant dans des groupes éther et/ou ester, ainsi que 2 à 16 atomes de carbone, et R² et R³ sont chacun identiques ou différents, et sont chacun représentés, indépendamment l'un de l'autre, par un radical hydrocarbure en C₁ à C₈ ramifié ou non ramifié, saturé ou insaturé.

6. Composition selon l'une des revendications 1, 2 ou 5, **caractérisée en ce que** la formule générale (I) s'applique, pour 50 à 100 % en poids du composé oxygéné (A), de façon telle que R¹ est identique ou différent et est représenté selon un ou plusieurs des segments de formule générale du groupe composé de (Ib) et (Ic) 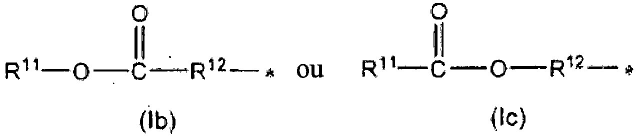 dans lesquelles
R¹¹ est dans chaque cas identique ou différent, et est représenté par un radical alkyle en C₁-C₈ à chaîne linéaire ou ramifiée, un radical cycloalkyle en C₅-C₇, ou un radical phényle, ainsi que
R¹² est dans chaque cas identique ou différent, et est représenté par un radical alkylène en C₂ à C₈, à chaîne linéaire ou ramifiée.

7. Composition selon l'une des revendications 1, 2 ou 5, **caractérisée en ce que** la formule générale (I), pour 50 à 100 % en poids du composé oxygéné (A), s'applique de façon telle que R¹ est identique ou différent et est représenté selon le segment de formule générale (Id)
R²¹-O-R²²- (Id)
dans laquelle
R²¹ est dans chaque cas identique ou différent, et est représenté par un radical alkyle en C₁ à C₄ à chaîne linéaire ou ramifiée, et
R²² est dans chaque cas identique ou différent, et est représenté par un radical alkylène en C₂ à C₆ à chaîne linéaire ou ramifiée.

8. Composition selon l'une des revendications 1 à 7, **caractérisée en ce que** 70 à 100 % en poids du composé de l'urée (B) ou bien contiennent au moins deux groupes urée, ou bien contiennent au moins un groupe urée et au moins un groupe uréthanne.

9. Composition selon l'une des revendications 1 à 8, **caractérisée en ce que** 50 à 100 % en poids du composé de l'urée (B) se présente selon la formule générale (II)
R³¹-[R³³-Z-R³⁴-W-]ₙR³² (II)
dans laquelle
R³¹ et R³² sont chacun identiques ou différents, et sont chacun indépendamment de l'autre représentés par un radical organique ramifié ou non ramifié, saturé ou insaturé, contenant 1 à 100 atomes de carbone, qui comprend au maximum un groupe urée et au maximum un groupe uréthanne,
R³³ et R³⁴ sont chacun identiques ou différents, et sont chacun indépendamment de l'autre représentés par des radicaux polyester ramifiés ou non ramifiés contenant 1 à 300 atomes de carbone, contenant en option des groupes éther, des radicaux polyéther ramifiés ou non ramifiés contenant 2 à 300 atomes de carbone, des radicaux polyamide ramifiés ou non ramifiés contenant 1 à 300 atomes de carbone, des radicaux polysiloxane contenant 3 à 100 atomes de silicium, des radicaux alkylène en C₂-C₂₂ ramifiés ou non ramifiés, des radicaux alcényle en C₃-C₁₈ ramifiés ou non ramifiés, des radicaux arylène en C₅-C₁₂ et/ou des radicaux arylalkylène en C₇-C₂₂ ramifiés ou non ramifiés,
Z et W sont chacun identiques ou différents, et sont chacun indépendamment de l'autre représentés par NH-CO-O et/ou NH-CO-NH, n est dans chaque cas identique ou différent, et est représenté par un nombre entier de 1 à 150, de préférence de 2 à 120.

10. Composition selon l'une des revendications 1 à 9, **caractérisée en ce que** 50 à 100 % en poids du composé de l'urée (B) présentent une masse moléculaire de 2 000 à 55 000, ainsi que 4 à 150 groupes urée.

11. Composition selon l'une des revendications 1 à 10, **caractérisée en ce que** 50 à 100 % en poids du composé de l'urée (B) se présentent selon l'une des formules générales choisies dans le groupe composé de (IIIa), (IIIb), (IIIc) et (IIId) 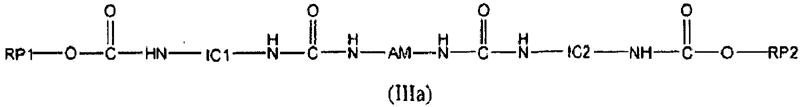 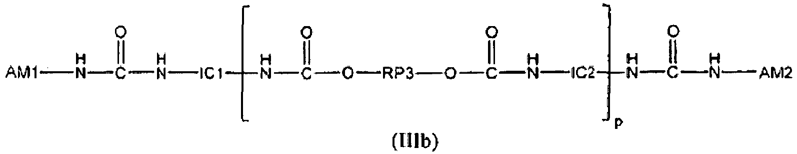 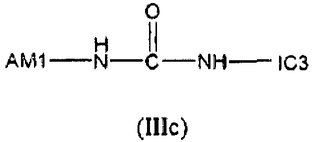 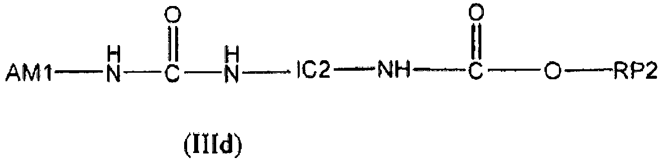 dans lesquelles
AM est identique ou différent, et est représenté par un radical organique aliphatique, aromatique ou aliphatique-aromatique, à chaîne linéaire ou ramifiée, saturé ou insaturé, ayant 2 à 50 atomes de carbone,
AM1, ainsi qu'AM2, sont chacun identiques ou différents, et sont chacun indépendamment de l'autre représentés par un radical organique aliphatique, aromatique ou aliphatique-aromatique, à chaîne linéaire ou ramifiée, saturé ou insaturé, ayant 1 à 50 atomes de carbone,
ICI, ainsi qu'IC2, sont chacun identiques ou différents, et sont chacun indépendamment de l'autre représentés par un radical hydrocarbure aliphatique, aromatique ou aliphatique-aromatique, à chaîne linéaire ou ramifiée, saturé ou insaturé, ayant 2 à 40 atomes de carbone,
IC3 est identique ou différent, et est représenté par un radical hydrocarbure aliphatique, aromatique ou aliphatique-aromatique, à chaîne linéaire ou ramifiée, saturé ou insaturé, ayant 2 à 24 atomes de carbone,
RP1, ainsi que RP2, sont chacun identiques ou différents, et sont chacun indépendamment de l'autre représentés par un radical organique aliphatique, aromatique ou aliphatique-aromatique, à chaîne linéaire ou ramifiée, saturé ou insaturé, ayant 1 à 24 atomes de carbone et/ou par un radical polyéther ayant 1 à 120 atomes d'éther-oxygène, et/ou par un radical polyester contenant en option des groupes éther, et comportant 1 à 100 groupes ester, et/ou par un radical polyamide ayant 1 à 100 groupes amide et/ou par un radical polysiloxane ayant 3 à 100 atomes de silicium,
RP3 est identique ou différent, et est représenté par un radical hydrocarbure aliphatique, aromatique ou aliphatique-aromatique, à chaîne linéaire ou ramifiée, saturé ou insaturé, ayant 2 à 24 atomes de carbone et/ou par un radical (poly)éther ayant 1 à 120 atomes d'éther-oxygène et/ou par un radical polyamide ayant 1 à 100 groupes amide et/ou par un radical polysiloxane ayant 3 à 100 atomes de silicium et/ou par un radical polyester ayant 1 à 100 groupes ester et contenant en option des groupes éther, et
p est identique ou différent, et est représenté par 0 et/ou 1.

12. Composition selon la revendication 11, **caractérisée en ce que** 70 à 100 % en poids du composé de l'urée (B) sont présents selon l'une des formules générales choisies dans le groupe composé de (IIIa), (IIIb), (IIIc) et (IIId), dans laquelle
AM est identique ou différent, et est choisi dans le groupe composé de 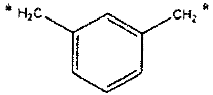 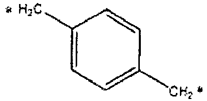 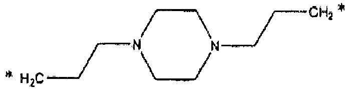 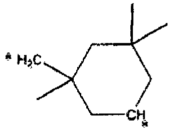 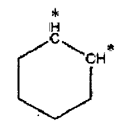 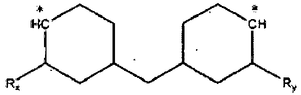 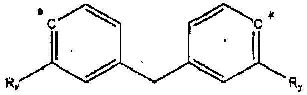 où Rₓ et R_{y} sont identiques ou différents, et sont chacun indépendamment de l'autre représentés par CH₃ et/ou un atome d'hydrogène (CH₂)_{q}, où q est identique ou différent et est représenté par un nombre entier de 2 à 12,
AM1 et AM2 sont chacun identiques ou différents et sont choisis dans le groupe composé des groupes n-propyle, isopropyle, butyle, isobutyle, tert-butyle, lauryle, oléyle, stéaryle, polyisobutylène et polyéther ayant 2 à 40 atomes d'éther-oxygène, benzyle, méthylbenzyle, cyclohexyle, carboxyalkyle, hydroxyalkyle et alkylalcoxysilane,
IC1 et IC2 sont chacun identiques ou différents, et sont choisis dans le groupe composé de 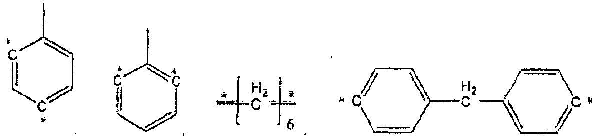 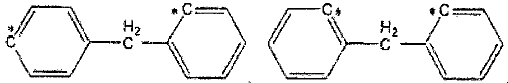 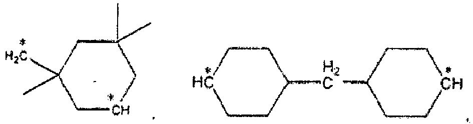 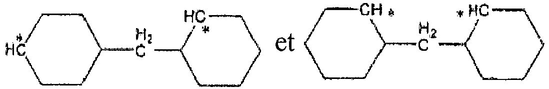 IC3 est identique ou différent, et est choisi dans le groupe composé des groupes méthyle, éthyle, phényle, benzyle, cyclohexyle et stéaryle,
RP1 et RP2 sont chacun identiques ou différents, et sont choisis dans le groupe composé des groupes alkyle en C₁ à C₁₈ ramifiés ou non ramifiés, oléyle, benzyle, allyle, de préférence un radical polyéther contenant des motifs structuraux d'oxyde d'éthylène, d'oxyde de propylène et/ou d'oxyde de butylène, et un radical polyester contenant des motifs structuraux de l'epsilon-caprolactone et/ou de la delta-valérolactone,
RP3 est identique ou différent et est choisi dans le groupe composé des groupes alkylène en C₁ à C₁₈ à chaîne linéaire ou ramifiée, alcénylène en C₂ à C₁₈ à chaîne linéaire ou ramifiée, de préférence des polyéthers ayant 1 à 25 atomes d'éther-oxygène et contenant des motifs structuraux d'oxyde d'éthylène, d'oxyde de propylène et/ou d'oxyde de butylène.

13. Composition selon l'une des revendications 1 à 11, **caractérisée en ce que** 70 à 100 % du composé de l'urée (B) peuvent être préparés par réaction d'isocyanates oligomérisés par formation d'isocyanurate et/ou d'uret-dione, avec des amines mono fonctionnelles.

14. Composition selon l'une des revendications 1 à 13, **caractérisée en ce que** 95 à 100 % en poids, de préférence 98 à 100 % en poids, du composé de l'urée (B) contiennent chacun au moins
un segment de molécule de formule générale (IVa)
-O-CO-NH-Y₁-NH-CO-NH- (IVa)
dans laquelle
Y₁ est identique ou différent et est représenté par un radical hydrocarbure saturé ou insaturé, ramifié ou non ramifié, contenant 6 à 20 atomes de carbone,
et ne contiennent chacun aucun segment de molécule de formule générale (IVb)
-O-CO-NH-Y₂-NH-CO-O- (IVb)
dans laquelle
Y₂ est identique ou différent et est représenté par un radical hydrocarbure saturé ou insaturé, ramifié ou non ramifié, contenant 6 à 20 atomes de carbone.

15. Composition selon l'une des revendications 1 à 14, contenant 0,5 à 4,0 % en poids du composé ionogène (C), 50 à 100 % en poids du composé ionogène (C) se présentant sous forme d'un sel de lithium ou de calcium, de préférence de son chlorure, de son acétate et/ou de son nitrate.

16. Composition selon l'une des revendications 1 à 15, qui convient au pilotage de la rhéologie, en particulier à la thixotropisation de systèmes fluides.

17. Utilisation d'une composition selon l'une des revendications 1 à 16 pour le pilotage de la rhéologie, en particulier pour la thixotropisation d'un mélange fluide.

18. Utilisation selon la revendication 17, **caractérisée en ce que** le mélange fluide se présente sous forme d'un revêtement, en particulier d'un vernis, d'une formulation de matière plastique, d'une pâte pigmentaire, d'une formulation pour matériau d'étanchéité, d'un produit cosmétique, d'une formulation pour céramique, d'une formulation pour colle, d'une masse de remplissage, d'une formulation pour matériau de construction, d'un lubrifiant, d'un bouche-pores, d'une encre d'imprimerie ou d'une encre.

19. Préparation qui se présente sous forme d'un vernis, d'une formulation de matière plastique, d'une pâte pigmentaire, d'une formulation pour matériau d'étanchéité, d'un produit cosmétique, d'une formulation pour céramique, d'une formulation pour colle, d'une masse de remplissage, d'une formulation pour matériau de construction, d'un lubrifiant, d'un bouche-pores, d'une encre d'imprimerie ou d'une encre, et à laquelle on a ajouté 0,1 à 7,5 % en poids d'une composition selon l'une des revendications 1 à 16.
